# EUROPEAN PATENT SPECIFICATION

(11) **EP 2 161 316 B1**
(45) Date of publication and mention of the grant of the patent: **30.08.2017**
(21) Application number: 08752429.4
(22) Date of filing: 08.05.2008
(51) Int. Cl.: C09D 143/04, C09D 5/16, C09D 7/12, C09D 133/06, C09D 133/12

(54) **ANTIFOULING COATING COMPOSITION, PROCESS FOR PRODUCING THE COMPOSITION, ANTIFOULING COATING FILM FORMED FROM THE COMPOSITION, COATED OBJECT HAVING THE COATING FILM ON SURFACE, AND METHOD OF ANTIFOULING TREATMENT BY FORMATION OF THE COATING FILM**
BEWUCHSHEMMENDE BESCHICHTUNGSZUSAMMENSETZUNG, VERFAHREN ZUR HERSTELLUNG DER ZUSAMMENSETZUNG, AUS DER ZUSAMMENSETZUNG HERGESTELLTER BEWUCHSHEMMENDER BESCHICHTUNGSFILM,BESCHICHTETER GEGENSTAND MIT DEM BESCHICHTUNGSFILM AUF DER OBERFLÄCHE, UND VERFAHREN ZUR BEWUCHSHEMMENDEN BEHANDLUNG DURCH BILDEN DES BESCHICHTUNGSFILMS.
COMPOSITION DE REVÊTEMENT ANTI-TACHE, PROCÉDÉ DE FABRICATION DE LA COMPOSITION, FILM DE REVÊTEMENT ANTI-TACHE FORMÉ À PARTIR DE LA COMPOSITION, OBJET ENDUIT COMPRENANT LE FILM DE REVÊTEMENT SUR SA SURFACE ET PROCÉDÉ DE TRAITEMENT ANTI-TACHE PAR FORMATION DU FILM DE REVÊTEMENT

(30) Priority: 22.06.2007 JP 2007165491
(43) Date of publication of application: 10.03.2010
(73) Proprietor: Nitto Kasei Co., Ltd., Osaka-shi Osaka 533-0031 (JP)
(72) Inventor: MORI, Kiyomi, Osaka-shi Osaka 533-0031 (JP); WAKU, Hidenori, Osaka-shi Osaka 533-0031 (JP); FUJIMOTO, Takayoshi, Osaka-shi Osaka 533-0031 (JP); HAMAURA, Nobuyuki, Osaka-shi Osaka 533-0031 (JP); IWAMOTO, Tsuyoshi, Osaka-shi Osaka 533-0031 (JP); SHIMOJITOSHO, Hiroshi, Osaka-shi Osaka 533-0031 (JP)
(74) Representative: Vossius & Partner Patentanwälte Rechtsanwälte mbB
(86) International application number: PCT/JP2008/058538
(87) International publication number: WO 2009/001619

(56) References cited:
- EP-A1- 1 342 756
- JP-A- H0 860 041
- JP-A- H0 948 946
- JP-A- 2001 106 962
- JP-A- 2005 082 725

## Description

### TECHNICAL FIELD

The present invention relates to an antifouling coating composition, a method for producing the composition, an antifouling coating film formed using the composition, a coated object having the coating film on its surface, and a method of antifouling treatment by formation of the coating film.

### BACKGROUND ART

Aquatic fouling organisms such as barnacles, Tubeworms, common mussels, *Bugula neritina,* sea squirts, green laver, sea lettuce, and slimes attach to ships (especially the ship bottoms), fishing tools such as fishing nets and fishing net accessories, and structures submerged in seawater such as power plant aqueducts, leading to dysfunction, impaired appearances, and other problems of the ships and so on.

The attachment of aquatic fouling organisms has been heretofore prevented by coating surfaces of ships, fishing tools, and submerged structures with antifouling coating materials that include organic tin-containing copolymers. For example, a coating film formed by application of an antifouling coating material that contains a polymer with tributyltin groups gradually dissolves the polymer component into seawater, causing constant replacement of coating film surfaces, which enables the prevention of the attachment of aquatic fouling organisms to the coating film. After dissolution, the coating film can be reapplied to exhibit continued antifouling performance. However, the use of these antifouling coating materials has now been abandoned due to problems with marine pollution.

Triorganosilyl ester-containing copolymers with triorganosilyl groups, which are less toxic and less environmentally harmful than organic tin groups, have recently been developed and used as hydrolyzable copolymers to replace organic tin-containing copolymers. However, although a coating film that includes a triorganosilyl ester-containing copolymer initially dissolves in seawater at a constant rate, the dissolving rate of the coating film gradually increases, and becomes excessively high after a long period of time has elapsed, making the design of the coating material difficult. For this reason, an attempt has been made to adjust the dissolving rate of the coating film by using triorganosilyl ester-containing copolymers in combination with rosin (or rosin derivatives) (Patent Documents 1 to 3).

However, when rosin (or a rosin derivative) is used, although a portion of the rosin reacts with a metal compound contained in the coating composition to form a metal salt during the manufacture of a coating material, the reactivity is insufficient, resulting in the rosin (or rosin derivative) with free carboxylic acid remaining in the coating composition. The rosin (or rosin derivative) has high hydrophilic properties, and hence tends to deteriorate the water resistance of the coating film. If the coating film has poor water resistance, it tends to develop defects such as blisters, cracks, and the like.

Accordingly, a method has been suggested to remove the rosin with unreacted free carboxylic acid by pre-mixing an excess of a metal compound with rosin (Patent Document 11). In this method, however, even though an excess of a metal compound is used, the metal compound and rosin do not react sufficiently, making it difficult to completely remove the rosin (or rosin derivative) with free carboxylic acid.

On the other hand, when a copolymer obtained by the copolymerization of silyl monomers with straight-chain alkyl groups, e.g., tri-n-butylsilyl (meth) acrylate, is used as the above-mentioned triorganosilyl copolymer, the hydrolysis rate of the coating film is very high (i.e., has poor water resistance), making it difficult to control the dissolving rate of the coating film. For this reason, copolymers obtained by the copolymerization of silyl monomers wherein all of the alkyl groups are branched, e.g., triisopropylsilyl (meth)acrylate, are now widely used (Patent Documents 4 to 12). When these copolymers are used, however, the coating films are brittle, and may be cracked, peeled, and the like.

When the above-mentioned copolymer containing triisopropylsilyl (meth)acrylate or a metal salt of rosin (or a rosin derivative) is used, the coating film exhibits stable solubility at a low seawater temperature, i.e., 25°C or less; however, as the seawater temperature becomes higher, the solubility of the coating film significantly increases, resulting in an unexpectedly large amount of the dissolved coating film. Therefore, it has been difficult to design the coating film thickness when applying an antifouling coating composition to ships that travel into tropical sea areas.

EP 1 342 756 A1 describes an antifouling coating composition comprising: (A) a silyl ester copolymer containing constituent units derived from a polymerizable unsaturated carboxylic acid silyl ester, (B) a carboxylic acid, (C) a bivalent or trivalent metal compound, and (D) a dehydrating agent.
Patent Document 1: Japanese Unexamined Patent Publication No. 10-30071
Patent Document 2: Japanese Unexamined Patent Publication No. 11-116857
Patent Document 3: Japanese Unexamined Patent Publication No. 11-116858
Patent Document 4: Japanese Unexamined Patent Publication No. 2000-248029
Patent Document 5: Japanese Unexamined Patent Publication No. 2000-24828
Patent Document 6: Japanese Unexamined Patent Publication No. 2000-265107
Patent Document 7: Japanese Unexamined Patent Publication No. 2000-81147
Patent Document 8: Japanese Unexamined Patent Publication No. 2002-53796
Patent Document 9: Japanese Unexamined Patent Publication No. 2002-53797
Patent Document 10: Japanese Unexamined Patent Publication No. 2002-97406
Patent Document 11: Japanese Unexamined Patent Publication No. 2003-261816
Patent Document 12: Japanese Unexamined Patent Publication No. 2005-082725

### DISCLOSURE OF THE INVENTION

### Problem to be Solved by the Invention

An object of the present invention is to provide a composition for forming an antifouling coating film that is highly environmentally friendly, can effectively exhibit an antifouling effect in seawater for a long period of time, and furthermore exhibits a stable coating film dissolving amount even in a sea area having a high seawater temperature.

### Means for Solving the Problem

The present inventors conducted extensive research to solve the above problem, and found that the above object can be achieved by using a composition having a specific constitution. The present invention has been accomplished based on this finding.

Specifically, the present invention provides the antifouling coating composition, the method for producing the composition, the antifouling coating film formed by using the composition, the coated object having the coating film on its surface, and the method of antifouling treatment by formation of the coating film as described below.
Item 1. An antifouling coating composition comprising:
   (1) a triisopropylsilyl (meth)acrylate copolymer of (a) 30 to 65 weight% of triisopropylsilyl (meth)acrylate, (b) 5 to 50 weight% of methyl methacrylate, and (c) 0 to 60 weight% of other (meth)acrylic ester,
      the triisopropylsilyl (meth)acrylate copolymer having a glass transition temperature of 20 to 70°C and a number average molecular weight of 5,000 to 30,000;
   (2) at least one salt selected from the group consisting of rosin copper salts and copper salts of rosin derivatives, and optionally at least one salt selected from the group consisting of rosin zinc salts and zinc salts of rosin derivatives; and
   (3) a cuprous oxide,
   the antifouling coating composition containing not higher than 1 weight% of rosins and rosin derivatives that contain one or more free carboxyl groups.
Item 2. The antifouling coating composition according to Item 1, wherein the other (meth)acrylic ester is at least one member selected from the group consisting of 2-methoxyethyl (meth)acrylate, ethyl (meth)acrylate, butyl (meth)acrylate and 2-ethylhexyl (meth)acrylate.
Item 3. The antifouling coating composition according to Item 1 or 2, wherein the weight ratio between the content of the triisopropylsilyl (meth)acrylate copolymer and the content of the salt (copolymer/salt) is in the range of 95/5 to 20/80.
Item 4. The antifouling coating composition according to Item 1 or 2, wherein the weight ratio between the content of the triisopropylsilyl (meth)acrylate copolymer and the content of the salt (copolymer/salt) is in the range of 85/15 to 40/60.
Item 5. The antifouling coating composition according to any one of Items 1 to 4, wherein
   the rosin copper salt is at least one member selected from the group consisting of gum rosin copper salts, wood rosin copper salts and tall oil rosin copper salts; and the copper salt of the rosin derivative is at least one member selected from the group consisting of hydrogenated rosin copper salts and disproportionated rosin copper salts.
Item 6. The antifouling coating composition according to any one of Items 1 to 5, wherein the weight ratio between the content of at least one zinc salt selected from the group consisting of rosin zinc salts and zinc salts of rosin derivatives, and the content of at least one copper salt selected from the group consisting of rosin copper salts and copper salts of rosin derivatives (zinc salt/copper salt) is in the range of 50/50 to 0/100.
Item 7. The antifouling coating composition according to any one of Items 1 to 6, which contains 100 to 400 parts by weight of cuprous oxide having an average particle diameter of 3 µm to 20 µm as the cuprous oxide per total amount of 100 parts by weight of the triisopropylsilyl (meth)acrylate copolymer and the at least one salt (2).
Item 8. The antifouling coating composition according to any one of Items 1 to 7, which further comprises 1 to 50 parts by weight of organic-based antifoulant per total amount of 100 parts by weight of the triisopropylsilyl (meth)acrylate copolymer and the at least one salt (2).
Item 9. The antifouling coating composition according to any one of Items 1 to 8, which further comprises 1 to 50 parts by weight of plasticizer per total amount of 100 parts by weight of the triisopropylsilyl (meth)acrylate copolymer and the at least one salt (2).
Item 10. The antifouling coating composition according to any one of Items 1 to 9, which further comprises 1 to 50 parts by weight of dewatering agent per total amount of 100 parts by weight of the triisopropylsilyl (meth)acrylate copolymer and the at least one salt (2).
Item 11. The antifouling coating composition according to Item 10, wherein the dewatering agent is at least one dehumidifier selected from the group consisting of alkoxysilanes and alkyl orthoformates.
Item 12. The antifouling coating composition according to any one of Items 1 to 11, which further comprises 1 to 50 parts by weight of a fatty acid amide-based dispersant per total amount of 100 parts by weight of the triisopropylsilyl (meth)acrylate copolymer and the at least one salt (2).
Item 13. A method of antifouling treatment comprising the step of forming an antifouling coating film on the surface of an object to be coated using the antifouling coating composition recited in any one of Items 1 to 12.
Item 14. An antifouling coating film formed using the antifouling coating composition recited in any one of Items 1 to 12.
Item 15. A coated object having the antifouling coating film of Item 14 on the surface thereof.
Item 16. A method for producing an antifouling coating composition comprising the step of mixing:
   (1) a triisopropylsilyl (meth)acrylate copolymer of (a) 30 to 65 weight% of triisopropylsilyl (meth)acrylate, (b) 5 to 50 weight% of methyl methacrylate, and (c) 0 to 60 weight% of other (meth)acrylic ester,
      the copolymer having a glass transition temperature of 20 to 70°C and a number average molecular weight of 5,000 to 30,000;
   (2) at least one salt selected from the group consisting of rosin copper salts and copper salts of rosin derivatives, and optionally at least one salt selected from the group consisting of rosin zinc salts and zinc salts of rosin derivatives; and
   (3) a cuprous oxide,
   the antifouling coating composition containing not higher than 1 weight% of rosins and rosin derivatives that contain one or more free carboxyl groups.
Item 17. The method for producing an antifouling coating composition according to Item 16, which comprises the step of mixing and dispersing a mixed solution using a disperser, the mixed solution containing:
   (1) a triisopropylsilyl (meth)acrylate copolymer of (a) 30 to 65 weight% of triisopropylsilyl (meth)acrylate, (b) 5 to 50 weight% of methyl methacrylate, and (c) 0 to 60 weight% of other (meth)acrylic ester,
      the copolymer having a glass transition temperature of 20 to 70°C and a number average molecular weight of 5,000 to 30,000;
   (2) at least one salt selected from the group consisting of rosin copper salts and copper salts of rosin derivatives, and optionally at least one salt selected from the group consisting of rosin zinc salts and zinc salts of rosin derivatives; and
   (3) a cuprous oxide having an average particle diameter of 3 to 10 µm.
Item 18. The method for producing an antifouling coating composition according to Item 16, which comprises the steps of:
   mixing and dispersing a mixed solution using a disperser, the mixed solution containing:
      (1) a triisopropylsilyl (meth)acrylate copolymer of (a) 30 to 65 weight% of triisopropylsilyl (meth)acrylate, (b) 5 to 50 weight% of methyl methacrylate, and (c) 0 to 60 weight% of other (meth)acrylic ester,
   the copolymer having a glass transition temperature of 20 to 70°C and a number average molecular weight of 5,000 to 30,000; and
      (2) at least one salt selected from the group consisting of rosin copper salts and copper salts of rosin derivatives, and optionally at least one salt selected from the group consisting of rosin zinc salts and zinc salts of rosin derivatives; and
   subsequently adding and mixing a cuprous oxide having an average particle diameter of 10 to 20 µm.

### Antifouling Coating Composition

The antifouling coating composition of the present invention is as described above.
Herein also described is an antifouling composition comprising:
(1) a triisopropylsilyl (meth)acrylate copolymer obtained by copolymerizing (a) 30 to 65 weight% of triisopropylsilyl (meth)acrylate, (b) 5 to 50 weight% of methyl methacrylate, and (c) 0 to 60 weight% of other (meth)acrylic ester, wherein the copolymer has a glass transition temperature of 20 to 70°C and a number average molecular weight of 5,000 to 30,000;
(2) at least one salt selected from the group consisting of rosin zinc salts, zinc salts of rosin derivatives, rosin copper salts and copper salts of rosin derivatives; and
(3) a cuprous oxide,
wherein the antifouling coating composition is substantially free from rosins and rosin derivatives containing one or more free carboxyl groups.

### (1) Triisopropylsilyl (meth)acrylate copolymer

The antifouling coating composition of the present invention comprises:
a triisopropylsilyl (meth)acrylate copolymer (Copolymer (1)) obtained by copolymerizing 30 to 65 weight% of triisopropylsilyl (meth)acrylate (Monomer (a)), 5 to 50 weight% of methyl (meth)acrylate (Monomer (b)), and 0 to 60 weight% of other (meth)acrylic ester (Monomer(c)), wherein the copolymer has a glass transition temperature of 20 to 70°C and a number average molecular weight of 5,000 to 30,000.

By containing Copolymer (1), the coating film formed using the antifouling coating composition of the present invention effectively achieves the antifouling performance, and prevents adhesion of aquatic fouling organisms to the antifouling coating film.

The term "other (meth)acrylic ester" (Monomer (c)) means acrylic esters or methacrylic esters other than methyl methacrylate. Specific examples thereof include methyl acrylate, ethyl (meth)acrylate, *n*-butyl (meth)acrylate, *i*-butyl (meth)acrylate, *t*-butyl (meth)acrylate, 2-ethylhexyl (meth)acrylate, lauryl (meth)acrylate and like alkyl (meth)acrylates; 2-methoxyethyl (meth)acrylate, 2-methoxypropyl (meth)acrylate, 4-methoxybutyl (meth)acrylate, 2-ethoxyethyl (meth)acrylate and like alkoxyalkyl (meth)acrylates; ethylene glycol monomethyl (meth)acrylate, propylene glycol monomethyl (meth)acrylate and like alkylene glycol monomethyl (meth)acrylates; 2-hydroxyethyl (meth)acrylate, 2-hydroxypropyl (meth)acrylate and like hydroxyalkyl (meth)acrylates; dimethylaminoethyl (meth)acrylate, diethylaminoethyl (meth)acrylate and like dialkylaminoethyl (meth)acrylates; etc. In addition, benzyl (meth)acrylate, phenyl (meth)acrylate may also be used. The above-mentioned examples of Monomer (c) may be used as a monomer component of Copolymer (1) singly or in combination. Among these, ethyl (meth)acrylate, *n*-butyl (meth)acrylate, 2-ethylhexyl (meth)acrylate, 2-methoxyethyl (meth)acrylate, 2-methoxypropyl (meth)acrylate, etc. are particularly preferable as Monomer (c).

In synthesizing Copolymer (1), any monomers other than the above-mentioned Monomers (a), (b) and (c) may be added in an amount that does not adversely affect the water resistance and resolvability of the coating film.

Examples of usable monomers include triorganosilyl (meth)acrylates, vinyl compounds having a functional group, aromatic compounds, acrylic acid and methacrylic acid. Examples of triorganosilyl (meth)acrylates include *tri*-*n*-butylsilyl (meth) acrylate, *tri-i*-butylsilyl (meth) acrylate, *tri-s*-butylsilyl (meth)acrylate, *tri*-phenylsilyl (meth)acrylate, t-butyldiphenylsilyl (meth)acrylate, etc. Examples of vinyl compounds having a functional group include vinyl chloride, vinylidene chloride, (meth)acrylonitrile, vinyl acetate, butyl vinyl ether, lauryl vinyl ether, N-vinyl pyrrolidone, etc. Examples of aromatic compounds include styrene, vinyl toluene, α-methyl styrene, etc.

Copolymer (1) is preferably a copolymer of triisopropylsilyl (meth)acrylate (Monomer (a)), methyl methacrylate (Monomer (b)), and at least one member selected from the group consisting of ethyl (meth)acrylate, *n*-butyl (meth)acrylate, 2-ethylhexyl (meth)acrylate, 2-methoxyethyl (meth)acrylate and 2-methoxypropyl (meth)acrylate (Monomer (c)).

Copolymer (1) is preferably obtained by copolymerizing generally 30 to 65 weight%, and preferably 35 to 50 weight% of Monomer (a); generally 5 to 50 weight%, and preferably 10 to 30 weight% of Monomer (b); and generally 0 to 60 weight%, and preferably 5 to 40 weight% of Monomer (c). The unit "weight%" indicates the percentage of each monomer when the total amount of the monomers is defined as 100 weight%.

When the content of Monomer (a) is in the range of 30 to 65 weight%, the resulting coating film can effectively achieve the desired antifouling effect. Furthermore, such an arrangement enables the hydrolysis rate of the coating film to be desirably controlled so that the antifouling effect can be maintained for a long period of time. This arrangement also improves the water resistance and strength of the resulting coating film.

If the content of Monomer (a) is less than 30 weight%, the resulting coating film has a poor resolvability and barely exhibits the antifouling effect for a long time. If the content of Monomer (a) exceeds 65 weight%, the resulting coating film has an unduly high resolvability, adversely affecting the designability of the coating film. Furthermore, this makes it impossible to render a satisfactory water resistance and strength to the coating film.

When the content of Monomer (b) is in the range of 5 to 50 weight%, the resulting coating film can maintain desirable hardness and strength for a long period of time. If the content of Monomer (b) is less than 5 weight%, the resulting coating film becomes too soft and tends to easily suffer from cold flow and like defects. If the content of Monomer (b) exceeds 50 weight%, although the strength of the resulting coating film is improved, the coating film becomes too hard, leading to a risk of the occurrence of cracking or peeling.

The glass transition temperature (Tg) of Copolymer (1) is preferably 20 to 70°C, and more preferably 30 to 60°C. When the Tg is in the range of 20 to 70°C, the hardness of the coating film is affected little by water temperature and atmospheric temperature, allowing the suitable hardness and strength to be maintained for a long period of time. If the Tg is lower than 20°C, the resulting coating film is unduly soft. When the water and atmospheric temperatures rise, the coating film becomes too soft, allowing cold flow and like defects to easily occur. If the Tg exceeds 70°C, the resulting coating film becomes too hard; this may result in the occurrence of cracking or peeling in the coating film.

The number average molecular weight (Mn) of Copolymer (1) is generally 5,000 to 30,000, and preferably 10,000 to 20,000. When the Mn falls within the range of 5,000 to 30,000, the resulting coating film will have the desired physical properties (the hardness and strength of the coating film). This prevents the occurrence of cracking and/or peeling, allowing the desirable antifouling effect to be maintained for a long time. If the Mn is less than 5,000, although the dissolving amount of coating film increases, the coating film becomes too brittle and easily suffers from cracking. If the Mn exceeds 30,000, the antifouling effect of the coating film cannot be maintained for a long time. Specifically, if the Mn exceeds 30,000, the resulting coating film becomes very strong, but has a low resolvability; therefore, the antifouling effect may gradually deteriorate. If the Mn exceeds 30,000, the viscosity of Copolymer (1) becomes unduly high. Therefore, a large amount of thinner is necessary when the composition including Copolymer (1) is used as a coating material; this adversely affects both the cost effectiveness and the environment.

One example of the method for the measurement of the Mn is gel permeation chromatography (GPC). When the Mn is measured by GPC, it is expressed as a value (a polystyrene-reduced value), obtained by conducting the measurement after preparing a calibration curve using polystyrene as a reference material.

Copolymer (1) may be a random copolymer, an alternating copolymer, a periodic copolymer, or a block copolymer.

Copolymer (1) may be obtained by, for example, polymerizing Monomer (a), Monomer (b) and Monomer (c) in the presence of a polymerization initiator.

Examples of polymerization initiators used in the polymerization reaction include 2,2'-azobisisobutyronitrile (AIBN), 2,2'-azobis-2-methylbutyronitrile, dimethyl-2,2'-azobisisobutyrate and like azo compounds; and benzoyl peroxide, di-*tert*-butyl peroxide, *tert*-butyl peroxybenzoate, *tert*-butyl peroxyisopropylcarbonate, *t*-butyl peroxyoctoate and like peroxides. These polymerization initiators may be used singly or in combination. Among the above examples, AIBN and *t*-butyl peroxyoctoate are particularly preferable.

By suitably selecting the amount of the polymerization initiator used, the molecular weight of Copolymer (1) can be suitably adjusted.

Examples of polymerization methods include solution polymerization, bulk polymerization, emulsion polymerization, suspension polymerization, etc. Among these, solution polymerization is preferable, because it allows Copolymer (1) to be prepared easily and accurately.

In the polymerization reaction, an organic solvent may be added, if necessary. Examples of organic solvents include xylene, toluene and like aromatic hydrocarbon-based solvents; hexane, heptane and like aliphatic hydrocarbon-based solvents; ethyl acetate, butyl acetate, isobutyl acetate, methoxypropyl acetate and like ester-based solvents; isopropyl alcohol, butyl alcohol and like alcohol-based solvents; dioxane, diethyl ether, dibutyl ether and like ether-based solvents; methyl ethyl ketone, methyl isobutyl ketone and like ketone-based solvents; etc. Among these, aromatic hydrocarbon-based solvents are preferable, and xylene is particularly preferable. These solvents may be used singly or in combination.

The reaction temperature in the polymerization reaction may be suitably selected depending on the type of the polymerization initiator, etc., but is generally 70 to 140°C, and preferably 80 to 120°C. The time necessary for the polymerization reaction may be suitably selected depending on the reaction temperature, etc., but is generally about 4 to 8 hours.

The polymerization reaction is preferably conducted in inert gas atmospheres, such as nitrogen gas and argon gas.

### (2) Rosin Salt and Rosin Derivative Salt

The antifouling coating composition described herein contains at least one salt selected from the group consisting of rosin zinc salts, zinc salts of rosin derivatives, rosin copper salts and copper salts of rosin derivatives.
The antifouling composition of the present invention contains at least one salt selected from the group consisting of rosin copper salts and copper salts of rosin derivatives. Because these salts have a high compatibility with Copolymer (1), they can stably exist in the coating film. Therefore, the composition of the present invention has excellent long-term storageability.

When sodium salt, calcium salt, magnesium salt, etc. are used as metal salts of rosin (or rosin derivatives), because the hydrophilicity of the metal salts is overly high, although not as high as that of rosin (or rosin derivatives) having free carboxylic acid, there is a risk that the water resistance of the coating film may be lowered.

The copper salt has a lower solubility in water than the zinc salt. In the present invention, by suitably selecting the types and amounts of the zinc salt and the copper salt used, the dissolving rate of the coating film can be desirably controlled so that a coating film that exhibits a stable dissolving rate can be obtained. When the composition of the present invention is used, for example, as a coating material for a ship bottom, it is preferable that the weight ratio of the zinc salt to the copper salt in the composition (zinc salt/copper salt) is 50/50 to 0/100. When the weight ratio falls within the range of 50/50 to 0/100, the resulting coating film will have little temperature dependency, and therefore a stable coating film dissolving rate can be obtained even in seawater having a high temperature.

Examples of rosin zinc salts (or copper salts) include gum rosin zinc salt (or copper salt), wood rosin zinc salt (or copper salt), tall oil rosin zinc salt (or copper salt), etc. These salts may be used singly or in combination.

Examples of zinc salts (or copper salts) of rosin derivatives include maleinized rosin zinc salts (or copper salts), formylated rosin zinc salts (or copper salts), polymerized rosin zinc salts (or copper salts), hydrogenated rosin zinc salts (or copper salts), disproportionated rosin zinc salts (or copper salts), etc. These salts may be used singly or in combination.

In the present invention, it is preferable that the rosin zinc salt be at least one member selected from the group consisting of gum rosin zinc salts, wood rosin zinc salts and tall oil rosin zinc salts; that the zinc salt of a rosin derivative be at least one member selected from the group consisting of hydrogenated rosin zinc salts and disproportionated rosin zinc salts; that the rosin copper salt be at least one member selected from the group consisting of gum rosin copper salts, wood rosin copper salts and tall oil rosin copper salts; and that the copper salt of a rosin derivative be at least one member selected from the group consisting of hydrogenated rosin copper salts and disproportionated rosin copper salts.

The rosin salts and the rosin derivative salts may be commercially available ones. Alternatively, the rosin salts and the rosin derivative salts may be produced by a known method. For example, the rosin (or rosin derivative) zinc salts can be prepared by reacting rosin (or a rosin derivative) having a free carboxyl group (COO⁻ group) with a zinc oxide while heating in a solution.

The weight ratio of Copolymer (1) to the salt in the composition (copolymer/salt) is preferably 95/5 to 20/80, and more preferably 85/15 to 40/60. When the weight ratio falls within the range of 95/5 to 20/80, the resulting coating film will have excellent hardness and strength, allowing the dissolving amount of the coating film to be desirably controlled and the coating film to exhibit a long-term antifouling effect.

The composition described herein is substantially free from rosin and rosin derivatives that contain free carboxyl groups. Specifically, the content of the rosin and rosin derivative in the composition of the present invention is
not higher than 1 weight%, and more preferably 0 to 0.1 weight%. The rosin and rosin derivatives that contain free carboxyl groups have high hydrophilicity. Therefore, when the coating film contains such rosins and rosin derivatives, the water resistance of the coating film will be lowered, which may cause blisters, cracking and like defects on the coating film.

### (3) Cuprous oxide

The antifouling coating composition
contains cuprous oxide. By containing the cuprous oxide, the resulting coating film can effectively exhibit the antifouling effect. In other words, the cuprous oxide can function as an antifoulant. There is no limitation to the form of the cuprous oxide, as long as it does not adversely affect the effect of the invention. For example, the cuprous oxide may take a form of a particle.

The average particle diameter of the cuprous oxide is preferably 3 to 20 µm. When the composition of the present invention contains the cuprous oxide having an average particle diameter of 3 to 20 µm, the dissolving rate of the coating film can be desirably controlled so that a long-term antifouling effect can be exhibited.

A preferable example of the form of the cuprous oxide is a cuprous oxide whose surface is covered with a coating agent. When a particulate cuprous oxide is used, it is preferable that the surface of each particle be covered with a coating agent. By covering with a coating agent, oxidation of the cuprous oxide can be desirably prevented.

Examples of the usable coating agents include stearic acid, lauric acid, glycerol, sucrose, lecithin, etc. These coating agents may be used singly or in combination.

It is preferable that the composition of the present invention contains 100 to 400 parts by weight, and more preferably 200 to 300 parts by weight of cuprous oxide per total amount of 100 parts by weight of Copolymer (1) and the salt. When the content of the cuprous oxide is 100 to 400 parts by weight per total amount of 100 parts by weight of Copolymer (1) and the salt, the coating film can exhibit an excellent antifouling effect.

The composition of the present invention may contain any inorganic antifoulant, in addition to the cuprous oxide, in such an amount that does not adversely affect the antifouling effect. Examples of usable inorganic antifoulants include copper thiocyanate (general name: copper rhodanide), cupronickel, copper powder, etc. These inorganic antifoulants may be used singly or in combination.

### (4) Organic antifoulant

The antifouling coating composition of the present invention may further contain any organic antifoulant.

There is no limitation to the organic antifoulants as long as they have a killing or repelling effect against aquatic fouling organisms. Examples of the organic antifoulants include 2-mercaptopyridine-N-oxide copper (general name: copper pyrithione) and like organic copper compounds; 2-mercaptopyridine-N-oxide zinc (general name: zinc pyrithione), zinc ethylenebisdithiocarbamate (general name: zineb), zinc bis(dimethyldithiocarbamate) (general name: ziram), bis(dimethyl dithiocarbamoyl) zinc ethylene bis(dithio carbamate) (general name: polycarbamate) and like organic zinc compounds; pyridine-triphenylborane, 4-isopropyl pyridyl-diphenylmethyl borane, 4-phenyl pyridiyl-diphenyl borane, triphenylboron-*n*-octadecyl amine, triphenyl[3-(2-ethylhexyloxy)propyl amine]boron and like organic boron compounds; and 2,4,6-trichloromaleimide, N-(2,6-diethylphenyl)-2,3-dichloromaleimide and like maleimide compounds. Other examples of the organic antifoulants include 4,5-dichloro-2-*n*-octyl-3-isothiazolone (general name: Sea-Nine 211), 3,4-dichlorophenyl-N-N-dimethylurea (general name: diuron), 2-methylthio-4-*t*-butylamino-6-cyclopropylamino-*s*-triazine (general name: Irgarol 1051), 2,4,5,6-tetrachloroisophthalonitrile (general name: chlorothalonil), N-dichlorofluoromethylthio-N',N'-dimethyl-N-*p*-tolylsulfamide (general name: tolylfluanid), N-dichloromethylthio-N',N'-dimethyl-N-phenylsulfide (general name: dichlofluanid), 2-(4-thiazolyl)benzimidazole (general name: thiabendazole), 3-(benzo[b]thien-2-yl)-5,6-dihydro-1,4,2-oxathiazine-4-oxide (general name: bethoxazine), 2-(*p-*chlorophenyl)-3-cyano-4-bromo-5-trifluoromethyl pyrrole (general name: Econea 28), etc. Among these, zinc pyrithione, copper pyrithione, pyridine-triphenylborane, 4-isopropylpyridyl-diphenylmethyl borane, bethoxazine, zineb, Sea-Nine 211 and Irgarol 1051 are preferable, and copper pyrithione, zinc pyrithione, pyridine-triphenylborane and bethoxazine are particularly preferable. These organic antifoulants may be used singly or in combination.

The content of the organic antifoulants in the composition of the present invention is preferably 1 to 50 parts by weight, and more preferably 10 to 30 parts by weight per total amount of 100 parts by weight of Copolymer (1) and the salt. If the content of the organic antifoulants is less than one part by weight, the antifouling effect of the organic antifoulant cannot satisfactorily be exhibited. If the content exceeds 50 parts by weight, no improvement in the antifouling effect can be observed in proportion to the increase in the amount of the organic antifoulant; this is thus uneconomical.

### (5) Plasticizer

The antifouling coating composition of the present invention may further contain a plasticizer. By containing the plasticizer, the plasticity of the composition can be enhanced, allowing a desirably strong coating film to be obtained.

Examples of the usable plasticizers include tricresyl phosphate, trioctylphosphate, triphenyl phosphate and like phosphate esters; dibutyl phthalate, dioctyl phthalate and like phthalate esters; dibutyl adipate, dioctyl adipate and like adipate esters; dibutyl sebacate, dioctyl sebacate and like sebacate esters; epoxidized soybean oil, epoxidized linseed oil and like epoxidized oils and fats; methyl vinyl ether polymer, ethyl vinyl ether polymer and like alkyl vinyl ether polymers; and polyethylene glycol, polypropylene glycol and like polyalkylene glycols. Other examples of the plasticizers include *t*-nonylpentasulfide, vaseline, polybutene, tris(2-ethyl hexyl) trimellitate, silicone oil, liquid paraffin, chlorinated paraffin, polymeric plasticizers formed of ethylenically unsaturated carboxylate polymer, etc. These plasticizers may be used singly or in combination.

The content of the plasticizer in the composition of the present invention depends on the content of the rosin salt and rosin derivative salt in the composition, but is preferably 1 to 50 parts by weight, and more preferably 5 to 30 parts by weight per total amount of 100 parts by weight of Copolymer (1) and the salt. If the content of the plasticizer is less than one part by weight, satisfactory improvement in the physical properties (strength and adhesiveness) cannot be obtained; if it exceeds 50 parts by weight, the coating film becomes too soft, and is practically unusable.

### (6) Dewatering agent

It is preferable that the antifouling coating composition of the present invention further contain a dewatering agent. The dewatering agent is an agent that removes water in the composition. Examples of usable dewatering agents include dehumidifiers and dehydrating agents. The dehumidifiers and the dehydrating agents may all be used singly, or both the dehumidifiers and the dehydrating agents may be used in combination.

The dehumidifier is a compound that can remove water in the coating composition by reacting with water. Examples of the dehumidifiers include methyl orthoformate, ethyl orthoformate and like alkyl orthoformates; tetraethoxysilane, tetrabutoxysilane, tetraphenoxysilane, tetrakis(2-ethoxybutoxy)silane, methyltrimethoxysilane, methyltriethoxysilane, dimethyldiethoxysilane, trimethylethoxysilane, diphenyldiethoxysilane and like alkoxysilanes; and maleic anhydride, phthalic anhydride and like acid anhydrides.

The dehydrating agent is a compound that can remove water in the composition by incorporating the water into the dehydrating agent as crystallization water. Examples of dehydrating agents include anhydrous gypsum, molecular sieves, magnesium sulfate, sodium sulfate, etc.

A dehumidifier is preferably used as the dehydrating agent. A preferable dehumidifier is at least one member selected from the group consisting of alkoxysilanes and alkyl orthoformates, and a particularly preferable dehumidifier is tetraethoxysilane.

There is no limitation to the content of the dewatering agent in the composition of the present invention, but it is preferably 1 to 50 parts by weight, and more preferably 2 to 30 parts by weight per total amount of 100 parts by weight of Copolymer (1) and the salt. If the content of the dewatering agent is less than one part by weight, the composition of the present invention may not be able to attain satisfactory storage stability. If the content of the dewatering agent exceeds 50 parts by weight, the coating film may become too brittle.

### (7) Dispersant

The antifouling coating composition of the present invention preferably further contains a dispersant (an antisettling agent). By containing a dispersant, sedimentation of the components (e.g., pigment, cuprous oxide, zinc oxide, titanium oxide, red iron oxide, talc, etc., those described later) of the composition of the present invention, as well as the formation of a hard cake (a hard precipitate), can be prevented during storage of the composition of the present invention. This also effectively solves the problem of dripping of the composition (the coating material) when a coating film is formed on the surface of an object to be coated by using the composition of the present invention.

Examples of dispersants include oxidized polyethylene-based dispersants, fatty acid amide-based dispersants, fatty acid ester-based dispersants, hydrogenated castor oil-based dispersants, vegetable polymerized oil-based dispersants, polyether ester-type surfactants, sulfate-type anionic surfactants, polycarboxylic acid amine salt-based dispersants, polycarboxylic acid-based dispersants, high-molecular-weight polyether-based dispersants, acrylic polymer-based dispersants, special silicon-based dispersants, talc-based dispersants, bentonite-based dispersants, kaolinite-based dispersants, silica gel-based dispersants, etc. These dispersants may be used singly or in combination. The composition of the present invention preferably contains a fatty acid amide-based dispersant. The composition of the present invention can be produced by, for example, preparing a mixed solution containing Copolymer (1) and other components, and then mixing and dispersing the mixed solution. When the mixed solution contains the fatty acid amide-based dispersant, the storage stability of the mixed solution can be enhanced, and the composition of the present invention can be obtained more easily and reliably.

In the present invention, commercially available dispersants may be used. Examples of the fatty acid amide-based dispersants include Dispalon A603-10X (or 20X), Dispalon 6900-10X (or 20X), and Dispalon 6810-10X (or 20X) (all products of Kusumoto Chemicals, Ltd.); Talen 7500-20 and Flownon SP-1000 (both products of Kyoeisha Chemical Co., Ltd.); etc.

The dispersants may be used after being dispersed in an organic solvent, such as xylene. There is no limitation to the content of the dispersant in the composition of the present invention; however, the content is preferably 1 to 50 parts by weight, and more preferably 2 to 30 parts by weight per total amount of 100 parts by weight of Copolymer (1) and the salt. If the content of the dispersant is less than one part by weight, the effects of the dispersant (i.e., preventing the formation of a hard cake) may not be exhibited. Specifically, the storage stability of the composition of the present invention may become inadequate. If the content of the dispersant exceeds 50 parts by weight, viscosity of the composition becomes too high, which may make conducting coating difficult. Furthermore, no improvement in the prevention of hard cake formation will be obtained by the increase of the content of the dispersant, and is therefore uneconomical.

### Other additives and the like

The antifouling coating composition of the present invention may further contain known pigments, dyes, antisetlling agents, antifoaming agents, etc.

Examples of the usable pigments include zinc oxide, red iron oxide, talc, titanium oxide, silica, bentonite, calcium carbonate, barium sulfate, organic red pigment, etc. These pigments may be used singly or in combination.

The composition of the present invention is usually dissolved or dispersed in an organic solvent. This makes the coating material desirably usable. Examples of the usable organic solvents include xylene, toluene, mineral spirit, MIBK, butyl acetate, etc. Among these, xylene and MIBK are particularly preferable. These organic solvents may be used singly or in combination.

The antifouling coating composition of the present invention has excellent storage stability, and will therefore gelate or solidify very little even after a long period of storage.

### Method of Production of Antifouling Coating Composition

The method for producing an antifouling coating composition that is substantially free from rosins and rosin derivatives that contain one or more free carboxyl groups
is as below.

The"method comprises the step of mixing and dispersing a mixed solution that contains:
(1) a triisopropylsilyl (meth)acrylate copolymer obtained by copolymerizing (a) 35 to 65 weight% of triisopropylsilyl (meth)acrylate, (b) 5 to 50 weight% of methyl methacrylate, and (c) 0 to 60 weight% of other (meth)acrylic ester,
   wherein the copolymer has a glass transition temperature of 20 to 70°C and a number average molecular weight of 5,000 to 30,000;
(2) at least one salt selected from the group consisting of rosin zinc salts, zinc salts of rosin derivatives, rosin copper salts and copper salts of rosin derivatives; and
(3) a cuprous oxide.

The above-described production method allows the antifouling coating composition to be effectively obtained.

The above-mentioned Copolymer (1), salts and cuprous oxides may be used as the copolymer, salt and cuprous oxide. If necessary, the organic antifoulants, dewatering agents, dispersants, pigments, and other additives, etc. listed above may be added.

The amounts of Copolymer (1), salt, cuprous oxide, etc. used may be suitably selected so that the resulting antifouling coating composition contains Copolymer (1), salt, cuprous oxide, etc., in acceptable content ranges as described above.

It is preferable that these components be mixed in such a manner that the copolymer and like various materials are dissolved or dispersed in a solvent. For example, the copolymer and the salt may be dissolved or dispersed in a solvent first, and then mixed with other materials (such as organic antifoulants). Examples of the usable solvents include xylene, toluene, mineral spirit, MIBK, butyl acetate, etc. Among these, xylene is particularly preferable. They may be used singly or in combination.

In the production of the antifouling coating composition , it is preferable to suitably select Production Method 1 or Production Method 2, depending on the average particle diameter of the cuprous oxide used.

Specifically, when a cuprous oxide having an average particle diameter of 3 to 10 µm, preferably 3 to 8 µm is used, Production Method 1 is preferably selected.

### Production Method 1

The antifouling coating composition can be produced by mixing and dispersing a mixed solution using a disperser. The mixed solution contains:
(1) a triisopropylsilyl (meth)acrylate copolymer obtained by copolymerizing (a) 30 to 65 weight% of triisopropylsilyl (meth)acrylate, (b) 5 to 50 weight% of methyl methacrylate, and (c) 0 to 60 weight% of other (meth)acrylic ester,
   wherein the copolymer has a glass transition temperature of 20 to 70°C and a number average molecular weight of 5,000 to 30,000;
(2) at least one salt selected from the group consisting of rosin zinc salts, zinc salts of rosin derivatives, rosin copper salts and copper salts of rosin derivatives; and
(3) a cuprous oxide having an average particle diameter of 3 to 10 µm, and preferably 3 to 8 µm.

The cuprous oxide having an average particle diameter of 3 to 10 µm tends to form secondary aggregation. Therefore, when only a cuprous oxide-containing material is added, the obtained composition may have lumps. This may cause cracking or the like in the resulting coating film. In Production Method 1, a mixed solution that contains cuprous oxide having an average particle diameter of 3 to 10 µm is mixed and dispersed using a disperser so that the secondary-aggregated cuprous oxide can be broken down. This makes it possible to obtain an antifouling coating composition with the cuprous oxide desirably dispersed therein.

Production Method 1 allows the antifouling coating composition to be produced by mixing and dispersing, using a disperser, a mixed solution that contains Copolymer (1), the salt, and the cuprous oxide having an average particle diameter of 3 to 10 µm.

The mixed solution may further contain, if necessary, organic antifoulants, dewatering agents, dispersants, pigments, various additives and the like mentioned above.

The contents of Copolymer (1), the salt, the cuprous oxide, etc. may be suitably selected so that the resulting antifouling coating composition contains Copolymer (1), the salt, the cuprous oxide, etc. in acceptable contents ranges as described above.

It is preferable that the mixed solution be prepared by dissolving or dispersing Copolymer (1) and like various materials in a solvent. One example of the method for preparing the mixed solution is that Copolymer (1) and the salt are dissolved or dispersed in a solvent, and then mixed with other materials (such as the above-mentioned organic antifoulants, etc.). Examples of the usable solvents are the same as those mentioned above.

The disperser may be desirably selected from those that can be used as micro-pulverizers. Specific examples thereof include mills and dissolvers.

Examples of the usable mills include ball mills, sand mills, bead mills, pearl mills, Dyno mills, Cowles mills, basket mills, attritors and like mills generally used for mixing and dispersing coating materials.

A dissolver is a disperser having a rotary vane-type grinder. The mixed solution can be mixed and dispersed by rotating the grinder. When a dissolver is used as the disperser, it is preferable that the grinder of the dissolver be rotated at high speed. By making the grinder rotate at a high speed, the secondary-aggregated cuprous oxide can be desirably broken down.

The dissolver may also be called a disper.

When a cuprous oxide having an average particle diameter of 10 to 20 µm, preferably 13 to 20 µm is used as the cuprous oxide, it is preferable to select Production Method 2, described below.

### Production Method 2

The antifouling coating composition can be produced by, using a disperser, mixing and dispersing a mixed solution that contains:
(1) a triisopropylsilyl (meth)acrylate copolymer obtained by copolymerizing (a) 30 to 65 weight% of triisopropylsilyl (meth)acrylate, (b) 5 to 50 weight% of methyl methacrylate, and (c) 0 to 60 weight% of other (meth)acrylic ester,
   wherein the copolymer has a glass transition temperature of 20 to 70°C and a number average molecular weight of 5,000 to 30,000; and
(2) at least one salt selected from the group consisting of rosin zinc salts, zinc salts of rosin derivatives, rosin copper salts and copper salts of rosin derivatives, and
subsequently adding and mixing a cuprous oxide having an average particle diameter of 10 to 20 µm, and preferably 13 to 20µm to the above-obtained mixture.

The cuprous oxide having an average particle diameter of 10 to 20 µm barely forms secondary aggregation. Therefore, the composition can be produced by mixing and dispersing a mixed solution that contains Composition (1) and the salt using a disperser, adding the cuprous oxide to the resulting mixed dispersion, and then mixing the mixture using mixing equipment in such a manner that the cuprous oxide particles will be ground as little as possible. In this method, the cuprous oxide will be ground very little, therefore allowing the surface area of the cuprous oxide in the resulting composition to be limited to a relatively small range. For example, the specific surface area of the cuprous oxide can be no greater than 1.3 × 10⁻³ mm², and is preferably in the range of 3.0 × 10⁻⁴ to 1. 3 × 10⁻³ mm²_{.}

When the surface area of the cuprous oxide is small, even if the temperature of the seawater is high, specifically not lower than 30°C, the dissolving rate of the coating film can be effectively controlled. Production Method 2 can shorten the time for the process conducted using the disperser, reducing the production cost of the composition of the present invention.

The mixed solution is the same as that used in Production Method 1, except that it does not contain the cuprous oxide.

The amount of the cuprous oxide added may be suitably selected so that the resulting antifouling coating composition contains the cuprous oxide in acceptable content ranges.

The disperser may be the same as that used in Production Method 1.

There is no limitation to the mixing equipment, and any known mixing equipment may be used. For example, the above-mentioned dissolver may be used. When the dissolver is used, it is preferable that the rotation speed of the grinder be set to medium or low. By setting the rotation speed of the grinder to medium or low, crushing of the cuprous oxide can be effectively prevented.

### Method of Antifouling Treatment, Antifouling Coating Film, and Coated Object

The method of antifouling treatment of the present invention is characterized in that an antifouling coating film is formed on the surface of the object to be coated using the above-explained antifouling coating composition. The method of antifouling treatment of the present invention can prevent adhesion of aquatic fouling organisms by the gradual dissolution of the surface of the antifouling coating film, so as to continually renew the surface of the coating film. After the dissolution of the coating film, the antifouling effect can be continuously exhibited by recoating the composition.

Examples of objects on which a coating film can be formed include ships (in particular, ship bottoms), fishing tools, structures submerged in seawater, etc. Examples of the fishing tools include fishing nets for use in aquaculture or in fixed netting, and fishing net accessories such as floats attached to fishing nets, ropes, etc. Examples of structures submerged in seawater include power plant aqueducts, bridges, port facilities, etc.

The antifouling coating film of the present invention can be formed by applying the antifouling coating composition to the surface (entirely or partially) of the object on which a coating film is formed.

Examples of the coating method include brush coating, spray coating, dipping, flow coating, spin coating, etc. These coating methods may be employed singly or in combination.

The coating composition is dried after application. The drying temperature may be room temperature. The drying time may be suitably selected depending on the thickness of the coating film, etc.

The thickness of the antifouling coating film may be suitably selected depending on the type of object on which a coating film is formed, the navigation speed of the ship, the seawater temperature, etc. For example, when the object on which a coating film is formed is a ship bottom, the thickness of the antifouling coating film is generally 50 to 500 µm, and preferably 100 to 400 µm.

The antifouling coating film of the present invention is advantageous in that:
1) It has excellent water resistance, and therefore cracking, peeling or the like occurs very little even if it is in contact with seawater for a long time; 2) It has a suitable hardness, and therefore cold flow or other defects will occur very little in the resulting coating film; 3) It has a high adhesiveness to the object on which a coating film is formed; and 4) It can effectively exhibit an antifouling effect in seawater for a long period of time, because it exhibits a stable coating film dissolving amount even in a sea area having a high seawater temperature (i.e., a water temperature of not lower than 25°C, specifically 25 to 35°C).

The coated object of the present invention has the antifouling coating film on its surface. The coated object of the present invention may have the antifouling coating film on the entire surface thereof, or a part thereof.

The coated object of the present invention is covered with the antifouling coating film having the characteristics of Items 1 to 4 described above. Therefore, it can be desirably applied to ships (in particular, ship bottoms), fishing tools, structures submerged in seawater, etc.

For example, when the antifouling coating film is formed on the surface of a ship bottom, the antifouling coating film gradually dissolves from the surface, so that the coating film surface is always renewed. This prevents the adhesion of aquatic fouling organisms.

Furthermore, the hydrolysis rate of the antifouling coating film in seawater is desirably controlled. Therefore, ships benefit from the antifouling effect for a long period of time; additionally, even when the ships are not moving, for example, during anchorage, rigging, etc., the adhesion and incrustation of aquatic fouling organisms is barely observed, and the antifouling effect is exhibited for a long time.

The surface of the antifouling coating film is basically free from cracking or peeling even after a long period of time. Therefore, it is unnecessary to re-form a new coating film after completely removing the existing coating film. Therefore, by directly recoating the antifouling coating film composition thereon, the antifouling coating film can be effectively formed. This makes it possible to continuously maintain the antifouling effect easily and at low cost.

### Effect of the Invention

The antifouling coating composition of the present invention can desirably control the hydrolysis rate of the coating film even when the temperature of seawater is high. Therefore, the coating film formed by using the composition can maintain a stable antifouling effect for a long time, even when a ship is sailing in an area of high seawater temperatures. Therefore, the composition of the present invention eases the design of the coating film. Furthermore, the composition of the present invention has excellent long-term storability. Specifically, the composition of the present invention thickens, gelates or solidifies very little even after long-term storage. Furthermore, the antifouling coating composition of the present invention is highly ecologically safe, and is substantially free from marine pollution, even if dissolved in seawater.

The antifouling coating film formed by using the antifouling coating composition of the present invention is advantageous in that:
1) It has excellent water resistance, and therefore cracking, peeling or the like occurs very little even if it is in contact with seawater for a long time; 2) It has a suitable hardness, and therefore cold flow or other defects occur very little in the resulting coating film; 3) It has a high adhesiveness to the object on which a coating film is formed; and 4) It can effectively exhibit an antifouling effect in seawater for a long period of time, because it exhibits a stable coating film dissolving amount even in a sea area having a high seawater temperature.

The coated object of the present invention is covered with the antifouling coating film having the characteristics of Items 1 to 4 described above. Therefore, it can be desirably applied to ships (in particular, ship bottoms), fishing tools, structures submerged in seawater, etc. For example, when the antifouling coating film is formed on the surface of a ship bottom, the antifouling coating film gradually dissolves from the surface, so that the coating film surface is always renewed. This prevents the adhesion of aquatic fouling organisms.

Furthermore, the antifouling coating film has a suitable solubility. Therefore, ships can benefit from the antifouling effect for a long period of time. In particular, even when ships sail in a sea area having a high seawater temperature, because of the stable coating film dissolving amount, the antifouling effect is exhibited for a long time. Additionally, when the ships are not moving, for example, during anchorage, rigging, etc., the adhesion and incrustation of aquatic fouling organisms is barely observed, and the antifouling effect is exhibited for a long time. This reduces the frictional resistance of the ships, and accordingly reduces the fuel cost while sailing.

Furthermore, the surface of the antifouling coating film is basically free from coating film defects, even after a long period of time. Therefore, after using the coated object for a predetermined period, a new antifouling coating film can be desirably formed by directly recoating the antifouling coating film composition thereon. This makes it possible to continuously maintain the antifouling effect in a simple and inexpensive manner.

### Examples

Features of the invention will be further clarified referring to the Examples, etc. shown below; however, the invention is not limited by the Examples, etc.

In each of the production examples, comparative production examples, examples, and comparative examples, "%" denotes "% by weight". Viscosity was determined at 25°C using a Brookfield viscometer. The number average molecular weight (Mn) was determined by gel permeation chromatography (GPC) (using a polystyrene standard). GPC was performed under the following conditions.

Equipment: HLC-8220GPC; Tosoh Corporation
Column: TSK-gel Super HZM-M, two
Flow rate: 0.35 mL/min
Detector: RI
Column thermostat temperature: 40°C
Eluate: THF
The non-volatile content was determined by heating for 3 hours at 110°C.

The amounts of each ingredient shown in Table 1 are represented in grams.

### Production Example 1 (Production of Copolymer (1) Solution)

Three-hundred fifty grams of xylene was charged to a 1,000 ml flask equipped with a thermometer, a reflux condenser, a stirrer, and a dropping funnel, after which a mixture of 200 g of triisopropylsilyl acrylate, 225 g of methyl methacrylate, 50 g of n-butyl acrylate, 25 g of 2-methoxyethyl methacrylate, and 4 g of AIBN (initially added) was added dropwise into the flask over a period of 1 hour, while stirring at 85 to 90°C in a nitrogen atmosphere. After the dropwise addition, the polymerization reaction was performed for 2 hours at 85 to 90°C. Two grams of AIBN (additional) was subsequently added to the resulting reaction solution to further continue the polymerization reaction for 2 hours at 85 to 90°C, after which 150 g of xylene (additional solvent) was added and dissolved, thus producing Copolymer (1) Solution (S-1). Table 1 shows the viscosity, non-volatile content, number average molecular weight (Mn), and glass transition temperature of Copolymer Solution (S-1).

### Production Examples 2 and 3 (Production of Copolymer (1) Solutions)

Polymerization reactions were performed according to the same procedure as Production Example 1, using the solvent, monomers, and polymerization initiator shown in Table 1, thus producing Copolymer (1) Solutions S-2 and S-3. Table 1 shows the viscosity, non-volatile content, number average molecular weight (Mn), and glass transition temperature of each copolymer solution obtained.

### Production Example 4 (Production of Copolymer (1) Solution)

Three-hundred fifty grams of xylene was charged to a 1,000 ml flask equipped with a thermometer, a reflux condenser, a stirrer, and a dropping funnel, after which a mixture of 175 g of triisopropylsilyl methacrylate, 100 g of methyl methacrylate, 100 g of n-butyl acrylate, 125 g of 2-methoxyethyl methacrylate, and 4 g of t-butyl peroxyoctoate (initially added) was added dropwise into the flask over a period of 1 hour, while stirring at 95 to 100°C in a nitrogen atmosphere. After the dropwise addition, the polymerization reaction was performed for 2 hours at 95 to 100°C. Two grams of t-butyl peroxyoctoate (additional) was subsequently added to the resulting reaction solution to further continue the polymerization reaction for 2 hours at 95 to 100°C, after which 150 g of xylene was added and dissolved, thus producing Copolymer (1) Solution (S-3). Table 1 shows the viscosity, non-volatile content, number average molecular weight (Mn), and glass transition temperature of Copolymer Solution (S-3).

### Production Examples 5 to 7 and Comparative Production Examples 1, 2, 5, and 6 (Production of Copolymer (1) Solutions and Copolymer Solutions H-1, H-2, H-5, and H-6)

Polymerization reactions were performed according to the same procedure as Production Example 4, using the organic solvents, monomers, and polymerization initiators shown in Table 1, thus producing Copolymer (1) Solutions S5 to S7 and Copolymer Solutions H-1, H-2, H-5, and H-6. Table 1 shows the viscosity, non-volatile content, number average molecular weight (Mn), and glass transition temperature of each copolymer solution obtained.

### Comparative Production Example 3 (Production of Copolymer Solution H-3)

Two hundred fifty grams of xylene was charged to a 1,000 ml flask equipped with a thermometer, a reflux condenser, a stirrer, and a dropping funnel, after which a mixture of 250 g of triisopropylsilyl methacrylate, 150 g of methyl methacrylate, 50 g of n-butyl acrylate, 50 g of 2-methoxyethyl methacrylate, and 2 g of AIBN (initially added) was added dropwise into the flask over a period of 1 hour, while stirring at 80 to 85°C in a nitrogen atmosphere. After the dropwise addition, the polymerization reaction was performed for 2 hours at 80 to 85°C. One gram of AIBN (additional) was subsequently added to the resulting reaction solution to further continue the polymerization reaction for 2 hours at 80 to 85°C, after which 250 g of xylene was added and dissolved, thus producing Copolymer Solution H-3. Table 1 shows the viscosity, non-volatile content, number average molecular weight (Mn), and glass transition temperature of Copolymer Solution H-3.

### Comparative Production Example 4 (Production of Copolymer Solution H-4)

Five hundred grams of xylene was charged to a 1,000 ml flask equipped with a thermometer, a reflux condenser, a stirrer, and a dropping funnel, after which a mixture of 300 g of triisopropylsilyl acrylate, 150 g of methyl methacrylate, 50 g of 2-methoxyethyl acrylate, and 8 g of t-butyl peroxyoctoate (initially added) was added dropwise into the flask over a period of 2 hours, while stirring at 125 to 130°C in a nitrogen atmosphere. After the dropwise addition, the polymerization reaction was performed for 2 hours at 125 to 130°C. Two grams of t-butyl peroxyoctoate (additional) was subsequently added to the resulting reaction solution to further continue the polymerization reaction for 2 hours at 125 to 130°C, thus producing Copolymer Solution H-4. Table 1 shows the viscosity, non-volatile content, number average molecular weight (Mn), and glass transition temperature of Copolymer Solution (H-4).

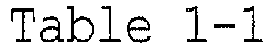

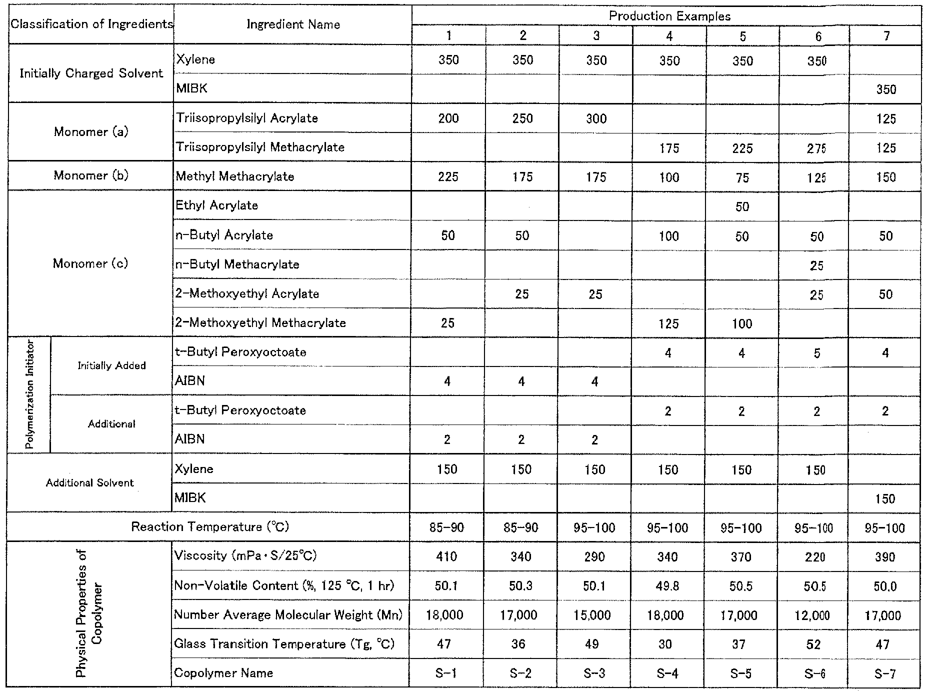

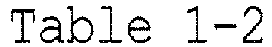

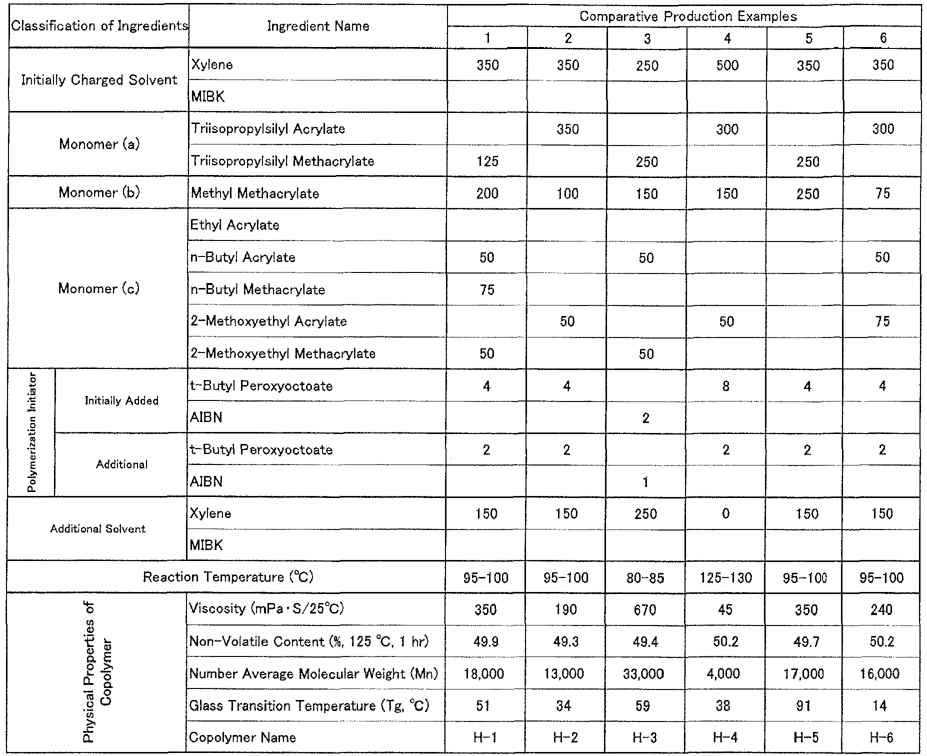

### Production Example 8 (Production of Gum Rosin Zinc Salt)

Four hundred grams of a xylene solution of gum rosin (solids content: 50%), 100 g of zinc oxide, and 50 g of xylene were added to a 1,000 ml flask equipped with a thermometer, a reflux condenser, and a stirrer, and the mixture was dehydrated by refluxing under reduced pressure for 3 hours at 70 to 80°C. The dehydrated product was subsequently cooled to room temperature (25°C) and filtered, producing a xylene solution of gum rosin zinc salt (a transparent dark brown solution; solids content: about 50%). The resulting xylene solution of gum rosin zinc salt had a non-volatile content of 50.5%.

### Production Example 9 (Production of Hydrogenated Rosin Zinc Salt)

Four hundred grams of a xylene solution of hydrogenated rosin (solids content: 50%), 100 g of zinc oxide, and 50 g of xylene were added to a 1,000 ml flask equipped with a thermometer, a reflux condenser, and a stirrer, and the mixture was dehydrated by refluxing under reduced pressure for 3 hours at 70 to 80°C. The dehydrated product was subsequently cooled to room temperature (25°C) and filtered, producing a xylene solution of hydrogenated rosin zinc salt (a transparent dark brown solution; solids content: about 50%). The resulting xylene solution of hydrogenated rosin zinc salt had a non-volatile content of 50.3%.

### Production Example 10 (Production of Gum Rosin Copper Salt)

Four hundred grams of a xylene solution of gum rosin (solids content: 50%), 200 g of cuprous oxide, and 100 g of methanol were added, together with glass beads (diameter: 2.5 to 3.5 mm), to a 1,000 ml flask equipped with a thermometer, a reflux condenser, and a stirrer, and the mixture was stirred for 8 hours at 70 to 80°C and then maintained for 2 days at 50°C. The resulting mixture was cooled to room temperature (25°C) and filtered, and subsequently concentrated under reduced pressure to remove the methanol by distillation. Xylene was then added to the obtained concentrate, thus producing a xylene solution of gum rosin copper salt (a transparent dark blue solution; solids content: about 50%). The resulting xylene solution of gum rosin copper salt had a non-volatile content of 50.8%.

### Production Example 11 (Production of Hydrogenated Rosin Copper Salt)

Four hundred grams of a xylene solution of hydrogenated rosin (solids content: 50%), 200 g of cuprous oxide, 100 g of methanol, and glass beads (diameter: 2.5 to 3.5 mm) were added to a 1,000 ml flask equipped with a thermometer, a reflux condenser, and a stirrer, and the mixture was stirred for 8 hours at 70 to 80°C and then maintained for 2 days at 50°C. The resulting mixture was cooled to room temperature (25°C) and filtered, and subsequently concentrated under reduced pressure to remove the methanol by distillation. Xylene was then added to the obtained concentrate, thus producing a xylene solution of hydrogenated rosin copper salt (a transparent dark blue solution; solids content: about 50%). The resulting xylene solution of hydrogenated rosin copper salt had a non-volatile content of 50.3%.

### Comparative Production Example 7 (Production of Gum Rosin Calcium Salt)

Four hundred grams of a xylene solution of gum rosin (solids content: 50%), 100 g of calcium oxide, and 50 g of xylene were added to a 1,000 ml flask equipped with a thermometer, a reflux condenser, and a stirrer, and the mixture was dehydrated by refluxing under reduced pressure for 3 hours at 70 to 80°C. The dehydrated product was subsequently cooled to room temperature (25°C) and filtered, producing a xylene solution of gum rosin calcium salt (a transparent dark brown solution; solids content: about 50%). The resulting xylene solution of gum rosin calcium salt had a non-volatile content of 50.8%.

### Examples 1 to 4 and Comparative Examples 1 to 8 (Production of Coating Compositions)

Each of Copolymer (1) Solutions S-1 to S-4 obtained in Production Examples 1 to 4 and Copolymer Solutions H-1 to H-6 obtained in Comparative Production Examples 1 to 6 for use as copolymers; any of the xylene solutions of gum rosin salts or hydrogenated rosin salts (solids content: 50%), the xylene solution of gum rosin (solids content: about 50%), and the xylene solution of hydrogenated rosin (solids content: about 50%) obtained in any of Production Examples 8 to 11 and Comparative Production Example 7 for use as rosins; and cuprous oxide with an average particle diameter of 3 or 6 µm for use as cuprous oxide; as well as any of the organic antifoulants, pigments, additives, and solvents listed in Table 2 were blended in the proportions (wt%) shown in Table 2. The above ingredients were mixed and dispersed with a small desktop laboratory sand mill (using glass beads with a diameter of 1.5 to 2.5 mm) to produce coating compositions.

### Examples 5 to 8 (Production of Coating Compositions)

Each of Copolymer (1) Solutions S-1 and S-5 to S-7 obtained in Production Examples 1 and 5 to 7 for use as copolymers; and any of the xylene solutions of gum rosin salts or hydrogenated rosin salts (solids content: 50%) obtained in Production Examples 8 to 11 for use as rosins; as well as any of the organic antifoulants, pigments, additives, and solvents listed in Table 2 were used in the proportions (wt%) shown in Table 2. The above ingredients were mixed and dispersed with a small desktop laboratory sand mill (using glass beads with a diameter of 1.5 to 2.5 mm), and the resulting mixtures were removed from the sand mill. Cuprous oxide with an average particle diameter of 13 or 19 µm was subsequently added to the mixtures and slowly stirred with a stirring blade, thus producing coating compositions.

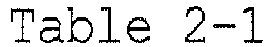

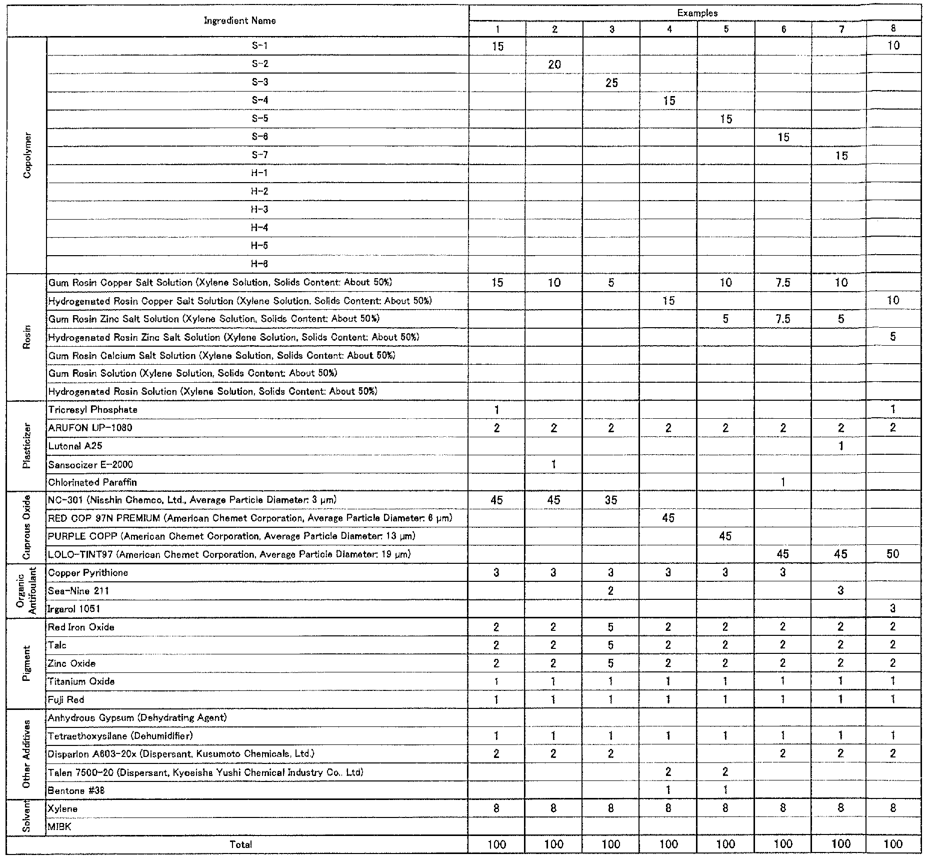

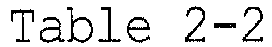

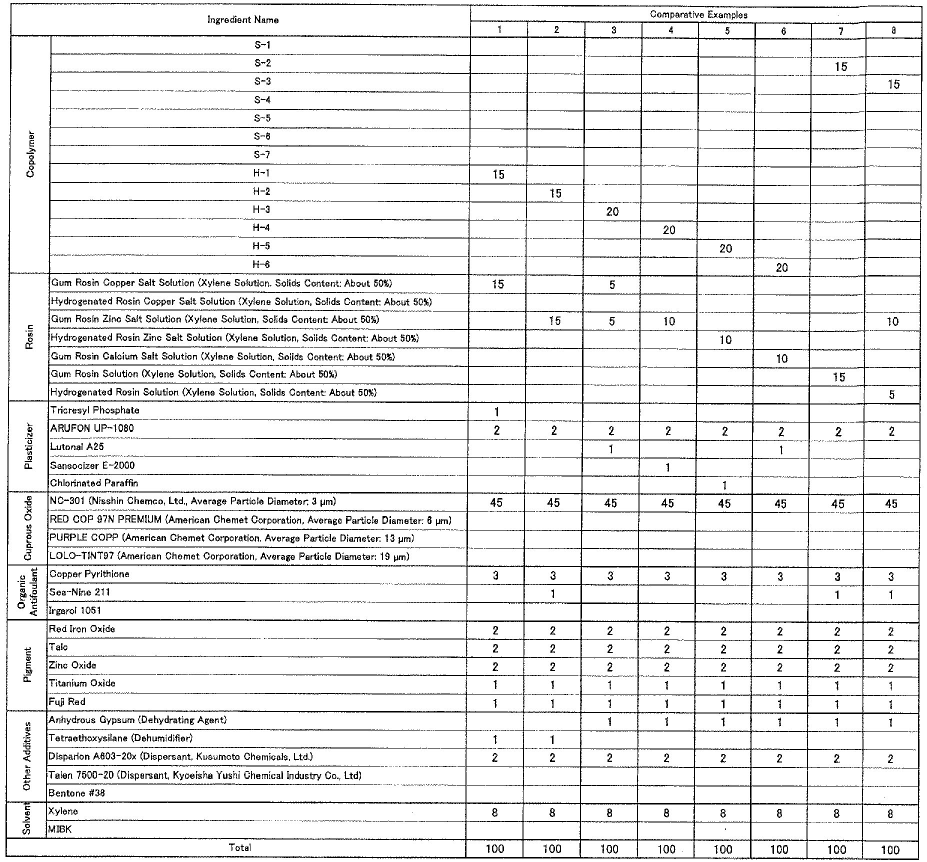

### Test Example 1 (Stability Test for Coating Compositions)

Each of the coating compositions obtained in Examples 1 to 8 and Comparative Examples 1 to 8 was sealed in a 100 ml wide-mouth tin can and stored in an incubator at 40°C for 1 month, after which the viscosity of the coating composition was measured using a Brookfield viscometer.

The viscosity of the coating composition was evaluated as follows.
A: a change in viscosity of less than 500 mPa·s/25°C (substantially no change in the coating composition)
B: a change in viscosity of 500 to 5,000 mPa·s/25°C (a slight increase in viscosity)
C: a change in viscosity of 5,000 to 100,000 mPa·s/25°C (a significant increase in viscosity)
D: a change so significant that the viscosity was unmeasurable (the coating composition turned into a gel or solidified)

The results are shown in Table 3.

It can be seen from Table 3 that the compositions containing rosin (or a rosin derivative) with free carboxy groups (Comp. Ex. 7 and 8) lack long-term stability.

### Test Example 2 (Coating Film Hardness)

Each of the antifouling coating compositions obtained in Examples 1 to 8 and Comparative Examples 1 to 8 was applied to a transparent glass plate (75 x 150 x 1 mm) so that the dry coating film thickness would be about 100 µm, and dried for 1 day at 40°C. The coating film hardness of the resulting dry coating film was measured at 25°C using a pendulum hardness tester. The results (count number) are shown in Table 3. A count number of 20 to 50 is preferable for practical purposes.

It can be seen from Table 3 that the coating films formed using the coating compositions of the invention (Ex. 1-8) have a suitable hardness.

### Test Example 3 (Adhesion Test for Coating Films)

The adhesion of each coating film was tested in accordance with JIS K-5600-5-6. Specifically, tests were conducted according to the following method. Each of the coating compositions obtained in Examples 1 to 8 and Comparative Examples 1 to 8 was first applied to a blast-finished fiber-reinforced plastic plate (FRP plate) (75 x 150 x 2 mm) and a tin plate (75 x 150 x 2 mm) so that the dry coating film thickness would be about 100 µm. The applied coating was then dried for 1 day at 40°C to prepare a dry coating film with a thickness of about 100 µm. The adhesion test was conducted on the dry coating film (2 x 2 mm, the number of squares in the crosshatch = 100).

The adhesion was evaluated as follows.
A: the number of the squares that did not peel off is from 70 to 100.
B: the number of the squares that did not peel off is from 40 to 69.
C: the number of the squares that did not peel off is from 20 to 39.
D: the number of the squares that did not peel off is from 0 to 19.

The results are shown in Table 3.

It can be seen from Table 3 that the coating films formed using the coating compositions of the invention (Ex. 1-8) strongly adhere to both the FRP plate and tin plate.

### Test Example 4 (Flexibility Test for Coating Films)

Each of the coating compositions obtained in Examples 1 to 8 and Comparative Examples 1 to 8 was applied to a blast-finished tin plate (75 x 150 mm) so that the dry coating film thickness would be about 100 µm. The applied coating was then dried for 1 day at 40°C to prepare a dry coating film with a thickness of about 100 µm. The tin plate coated with the dry coating film was bent 90°, and the condition of the bent coating film was visually inspected.

The flexibility was evaluated as follows.
A: substantially free of cracks
B: contained minute cracks
C: contained large cracks
D: a portion of the coating film easily peeled

The results are shown in Table 3.

It can be seen from Table 3 that the coating films formed using the coating compositions of the invention (Ex. 1-8) are tough and resistant to embrittlement.

### Test Example 5 (Water Resistance Test for Coating Films)

An anti-corrosive coating film was formed by applying an anti-corrosive coating material (a vinyl-based A/C) to a ground glass plate (75 x 150 x 1 mm) so that the thickness after drying would be about 50 µm, followed by drying. Each of the coating compositions obtained in Examples 1 to 8 and Comparative Examples 1 to 8 was subsequently applied to the anti-corrosive coating film so that the dry coating film thickness would be about 100 µm. The applied coating was dried for 1 day at 40°C, thus preparing a test piece with a dry coating film thickness of about 100 µm. The test piece was immersed in natural seawater at 35°C for 3 months, after which the condition of the coating film was visually inspected.

The water resistance was evaluated as follows.
A: the coating film underwent no change
B: the coating film slightly changed color
C: the coating film was slightly blistered
D: defects such as cracks, swelling, and peeling were observed in the coating film

The results are shown in Table 3.

It can be seen from Table 3 that the coating films formed using the coating film compositions of the invention (Ex. 1-8) have excellent resistance to water.

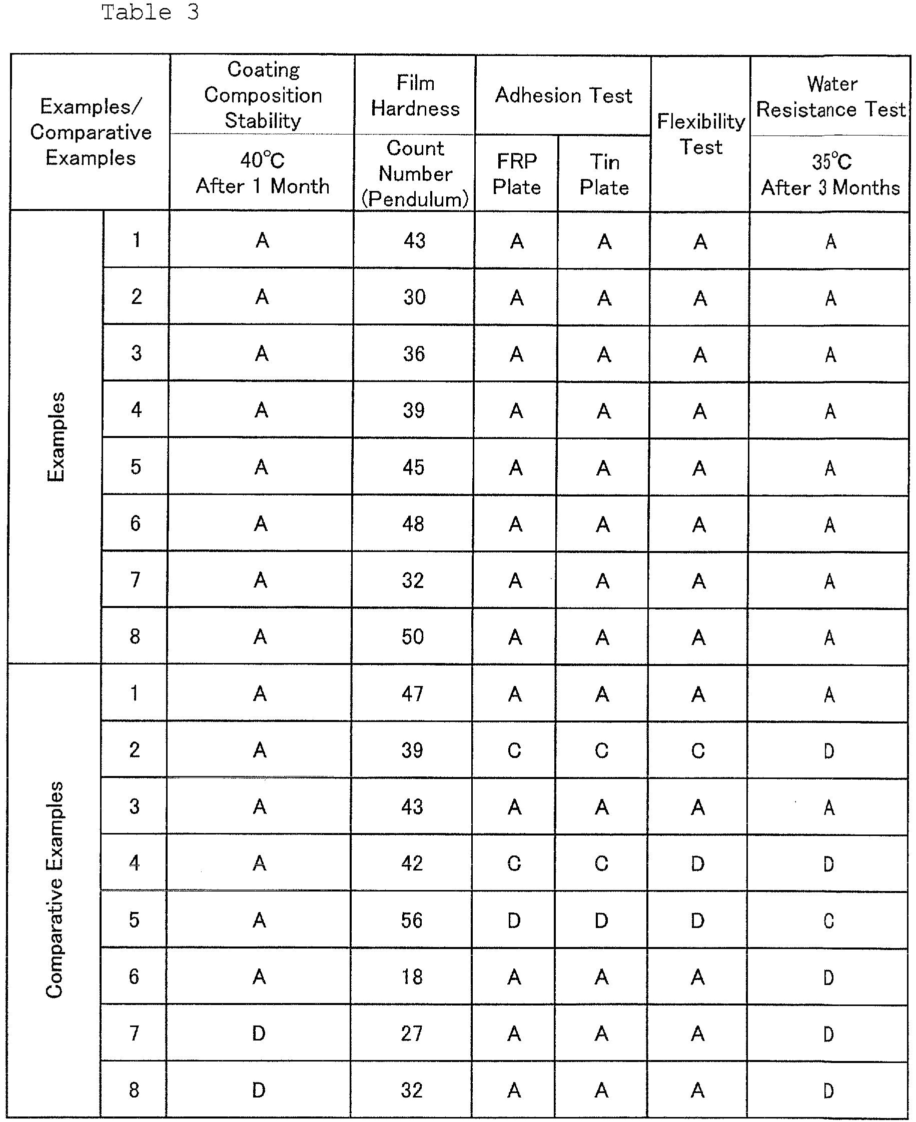

### Test Example 6 (solubility Test (Rotary Test) for Coating Films)

A tank was centrally provided with a rotating drum with a diameter of 515 mm and a height of 440 mm to allow the rotation of the drum via a motor. The tank was also provided with a cooling apparatus for keeping the seawater temperature constant, and a pH automatic controller for keeping the pH of the seawater constant.

Two test plates were prepared for each coating composition according to the following method.

An anti-corrosive coating film was formed by applying an anti-corrosive coating material (a vinyl-based A/C) to a hard vinyl chloride plate (75 x 150 x 1 mm) so that the thickness after drying would be about 50 µm, followed by drying. Each of the antifouling coating compositions obtained in Examples 1 to 8 and Comparative Examples 1 to 8 was applied to the anti-corrosive coating film so that the thickness after drying would be about 300 µm. The applied coating was dried for 3 days at 40°C, thus preparing a test plate having a dry coating film with a thickness of about 300 µm.

One of the thus-prepared test plates was secured to the rotating drum of the rotary apparatus of the above-mentioned equipment to contact the seawater, and the rotating drum was rotated at a speed of 20 knots. During the test, the seawater temperature was maintained at 25°C and the pH at 8.0 to 8.2; the seawater was replaced once every week.

The other test plate was also secured to the rotating drum of the rotary apparatus of the above-mentioned equipment to contact the seawater, and the rotating drum was rotated at a speed of 20 knots. During the test, the seawater temperature was maintained at 30°C and the pH at 8.0 to 8.2; the seawater was replaced once every week.

The initial coating film thickness and the remaining coating film thickness after 6 months were measured for each test plate, using a laser focus displacement meter, and the thickness of the dissolved coating film was calculated from the difference therebetween to give the dissolving amount of the coating film.

The dissolving amount of the coating film is represented in terms of the dissolving amount of the coating film per month (µm/month). The results are shown in Table 4.

It can be seen from Table 4 that the coating films formed using the coating compositions of the invention (Ex. 1 to 8) are dissolved in seawater in amounts of about 3 to 5 µm per month. Specifically, this shows that the coating films formed using the coating compositions of the invention exhibit certain reductions in the dissolving rate, so that they are dissolved stably for an extended period of time. Furthermore, the coating films formed using the coating compositions of the invention have excellent water resistance and stable dissolving rates even in sea areas with a high seawater temperature (at a seawater temperature of 30°C). Therefore, the coating films can more advantageously maintain the antifouling performance for an extended period of time.

It can be seen that the coating films formed using the coating compositions of Comparative Examples 1, 3 and 5 are difficult to dissolve in seawater, and cannot exhibit an effective antifouling effect. Additionally, it can be seen that the coating films formed using the coating compositions of Comparative Examples 2, 4, and 6 to 8 have high dissolving rates and low water resistance, causing the attachment of organisms, or cracks and/or peeling during the test.

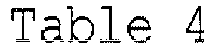

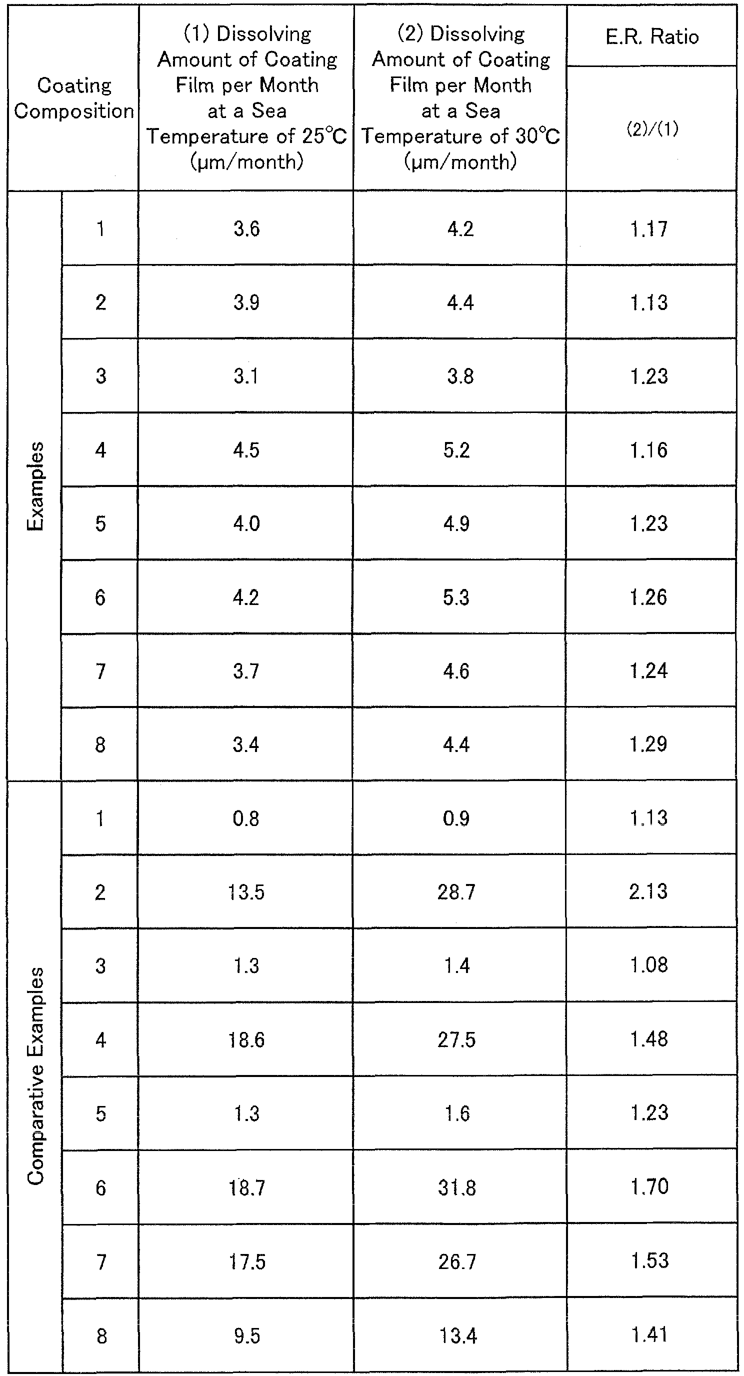

### Test Example 7 (Antifouling Test)

Each of the coating compositions obtained in Examples 1 to 8 and Comparative Examples 1 to 8 was applied to both surfaces of a hard vinyl chloride plate (100 x 200 x 2 mm) so that the dry coating film thickness would be about 200 µm. The applied coating was dried for 3 days at room temperature (25°C), thus preparing a test plate having a dry coating film with a thickness of about 200 µm. This test plate was immersed at 1.5 m below sea level in Owase City, Mie Prefecture, Japan, and fouling of the test plate was examined for 24 months.

The results are shown in Table 5.

Note that the figures in Table 5 represent the areas (%) to which fouling organisms were attached.

It can be seen from Table 5 that the coating films formed using the coating compositions of the invention (Ex. 1-8) are substantially free of aquatic fouling organisms, compared with the coating films formed using the coating film compositions of Comparative Examples 1 to 8. This is because the coating films formed using the coating compositions of the invention exhibit certain reductions in the hydrolysis rate, so that they are dissolved stably for an extended period of time.

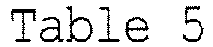

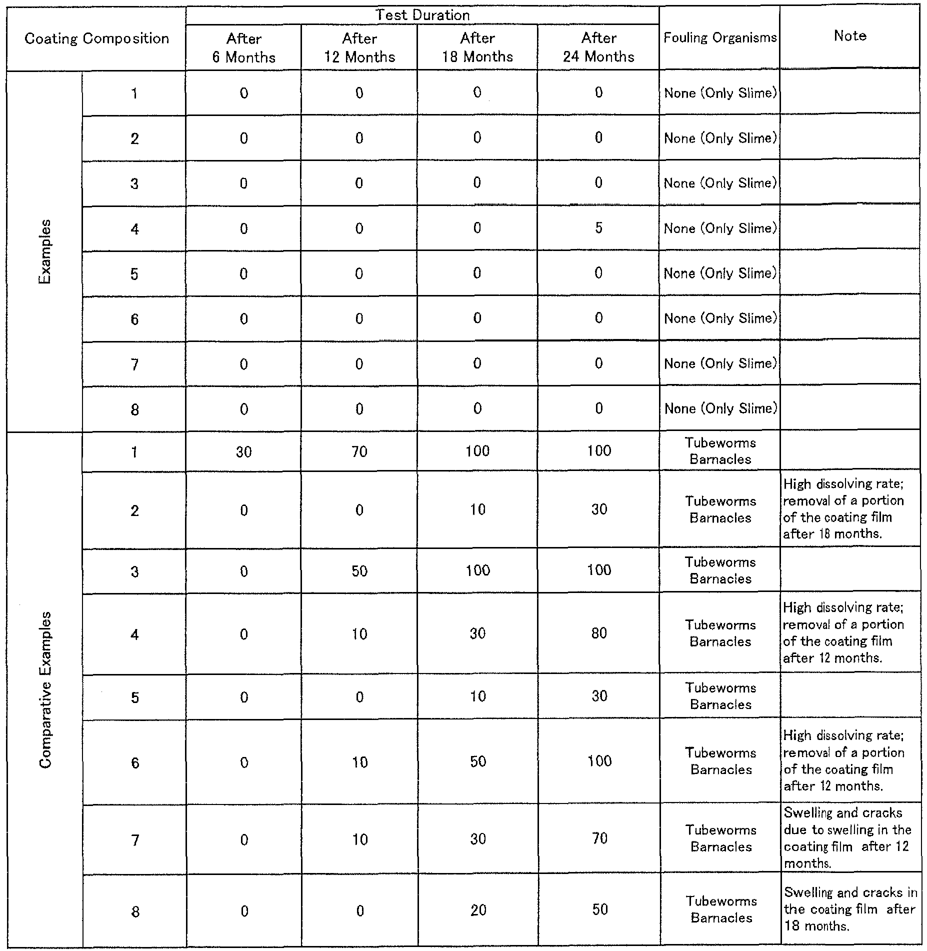

## Claims

1. An antifouling coating composition comprising:
(1) a triisopropylsilyl (meth)acrylate copolymer of
(a) 30 to 65 weight% of triisopropylsilyl (meth)acrylate,
(b) 5 to 50 weight% of methyl methacrylate, and
(c) 0 to 60 weight% of other (meth)acrylic ester,
the triisopropylsilyl (meth)acrylate copolymer having a glass transition temperature of 20 to 70°C and a number average molecular weight of 5,000 to 30,000;
(2) at least one salt selected from the group consisting of rosin copper salts and copper salts of rosin derivatives, and optionally at least one salt selected from the group consisting of rosin zinc salts and zinc salts of rosin derivatives; and
(3) a cuprous oxide,
the antifouling coating composition containing not higher than 1 weight% of rosins and rosin derivatives that contain one or more free carboxyl groups.

2. The antifouling coating composition according to claim 1, wherein the other (meth)acrylic ester is at least one member selected from the group consisting of 2-methoxyethyl (meth)-acrylate, ethyl (meth)acrylate, butyl (meth)acrylate and 2-ethylhexyl (meth)acrylate.

3. The antifouling coating composition according to claim 1 or 2, wherein the weight ratio between the content of the triisopropylsilyl (meth)acrylate copolymer and the content of the salt (copolymer/ salt) is in the range of 95/5 to 20/80.

4. The antifouling coating composition according to claim 1 or 2, wherein the weight ratio between the content of the triisopropylsilyl (meth)acrylate copolymer and the content of the salt (copolymer/ salt) is in the range of 85/15 to 40/60.

5. The antifouling coating composition according to any one of claims 1 to 4, wherein the rosin copper salt is at least one member selected from the group consisting of gum rosin copper salts, wood rosin copper salts and tall oil rosin copper salts; and the copper salt of the rosin derivative is at least one member selected from the group consisting of hydrogenated rosin copper salts and disproportionated rosin copper salts.

6. The antifouling coating composition according to any one of claims 1 to 5, wherein the weight ratio between the content of the at least one zinc salt selected from the group consisting of rosin zinc salts and zinc salts of rosin derivatives and the content of the at least one copper salt selected from the group consisting of rosin copper salts and copper salts of rosin derivatives (zinc salt/copper salt) is in the range of 50/50 to 0/100.

7. The antifouling coating composition according to any one of claims 1 to 6, which contains 100 to 400 parts by weight of cuprous oxide having an average particle diameter of 3 to 20 µm as the cuprous oxide per total amount of 100 parts by weight of the triisopropylsilyl (meth)acrylate copolymer and the at least one salt (2).

8. The antifouling coating composition according to any one of claims 1 to 7, which further comprises 1 to 50 parts by weight of organic-based antifoulant per total amount of 100 parts by weight of the triisopropylsilyl (meth)acrylate copolymer and the at least one salt (2).

9. The antifouling coating composition according to any one of claims 1 to 8, which further comprises 1 to 50 parts by weight of plasticizer per total amount of 100 parts by weight of the triisopropylsilyl (meth)acrylate copolymer and the at least one salt (2).

10. The antifouling coating composition according to any one of claims 1 to 9, which further comprises 1 to 50 parts by weight of dewatering agent per total amount of 100 parts by weight of the triisopropylsilyl (meth)acrylate copolymer and the at least one salt (2).

11. The antifouling coating composition according to claim 10, wherein the dewatering agent is at least one dehumidifier selected from the group consisting of alkoxysilanes and alkyl orthoformates.

12. The antifouling coating composition according to any one of claims 1 to 11, which further comprises 1 to 50 parts by weight of a fatty acid amide-based dispersant per total amount of 100 parts by weight of the triisopropylsilyl (meth)acrylate copolymer and the at least one salt (2).

13. A method of antifouling treatment comprising the step of forming an antifouling coating film on the surface of an object to be coated using the antifouling coating composition recited in any one of claims 1 to 12.

14. An antifouling coating film formed using the antifouling coating composition recited in any one of claims 1 to 12.

15. A coated object having the antifouling coating film of claim 14 on the surface thereof.

16. A method for producing an antifouling coating composition comprising the step of mixing:
(1) a triisopropylsilyl (meth)acrylate copolymer of
(a) 30 to 65 weight% of triisopropylsilyl (meth)acrylate,
(b) 5 to 50 weight% of methyl methacrylate, and
(c) 0 to 60 weight% of other (meth)acrylic ester,
the copolymer having a glass transition temperature of 20 to 70°C and a number average molecular weight of 5,000 to 30,000;
(2) at least one salt selected from the group consisting of rosin copper salts and copper salts of rosin derivatives, and optionally at least one salt selected from the group consisting of rosin zinc salts and zinc salts of rosin derivatives; and
(3) a cuprous oxide,
the antifouling coating composition containing not higher than 1 weight% of rosins and rosin derivatives that contain one or more free carboxyl groups.

17. The method for producing an antifouling coating composition according to claim 16, which comprises the step of mixing and dispersing a mixed solution using a disperser, the mixed solution containing:
(1) the triisopropylsilyl (meth)acrylate copolymer as defined in claim 16;
(2) the salt as defined in claim 16; and
(3) the cuprous oxide wherein the cuprous oxide has an average particle diameter of 3 to 10 µm.

18. The method for producing an antifouling coating composition according to claim 16, which comprises the steps of:
mixing and dispersing a mixed solution using a disperser, the mixed solution containing:
(1) the triisopropylsilyl (meth)acrylate copolymer as defined in claim 16; and
(2) the salt as defined in claim 16, and subsequently adding and mixing
(3) the cuprous oxide wherein the cuprous oxide has an average particle diameter of 10 to 20 µm.

## Patentansprüche

1. Eine bewuchshemmende Beschichtungszusammensetzung, umfassend:
(1) ein Triisopropylsilyl(meth)acrylat-Copolymer von
(a) 30 bis 65 Gew.-% Triisopropylsilyl(meth)acrylat,
(b) 5 bis 50 Gew.-% Methylmethacrylat, und
(c) 0 bis 60 Gew.-% eines anderen (Meth)acrylsäureesters,
wobei das Triisopropylsilyl(meth)acrylat-Copolymer eine Glasübergangstemperatur von 20 bis 70°C und ein Zahlenmittel des Molekulargewichts von 5.000 bis 30.000 aufweist;
(2) mindestens ein Salz, ausgewählt aus der Gruppe bestehend aus Kolophonium(Rosin)-Kupfer-Salzen und Kupfersalzen von Kolophonium(Rosin)-Derivaten, und gegebenenfalls mindestens ein Salz, ausgewählt aus der Gruppe bestehend aus Kolophonium(Rosin)-Zink-Salzen und Zinksalzen von Kolophonium(Rosin)-Derivaten; und
(3) ein Kupfer(I)oxid,
wobei die bewuchshemmende Beschichtungszusammensetzung nicht mehr als 1 Gew.-% Kolophonium und Kolophoniumderivate mit einer oder mehreren freien Carboxylgruppen enthält.

2. Die bewuchshemmende Beschichtungszusammensetzung gemäß Anspruch 1, wobei der andere (Meth)acrylsäureester mindestens eines, ausgewählt aus der Gruppe bestehend aus 2-Methoxyethyl(meth)acrylat, Ethyl(meth)acrylat, Butyl(meth)acrylat und 2-Ethylhexyl-(meth)acrylat, ist.

3. Die bewuchshemmende Beschichtungszusammensetzung gemäß Anspruch 1 oder 2, wobei das Gewichtsverhältnis zwischen dem Anteil des Triisopropylsilyl(meth)acrylat-Copolymers und dem Anteil des Salzes (Copolymer/ Salz) im Bereich von 95/5 bis 20/80 liegt.

4. Die bewuchshemmende Beschichtungszusammensetzung gemäß Anspruch 1 oder 2, wobei das Gewichtsverhältnis zwischen dem Anteil des Triisopropylsilyl(meth)acrylat-Copolymers und dem Anteil des Salzes (Copolymer/ Salz) im Bereich von 85/15 bis 40/60 liegt.

5. Die bewuchshemmende Beschichtungszusammensetzung gemäß einem der Ansprüche 1 bis 4, wobei das Kolophonium-Kupfer-Salz mindestens eines, ausgewählt aus der Gruppe bestehend aus Balsamkolophonium-Kupfer-Salzen, Wurzelkolophonium-Kupfer-Salzen und Tallölkolophonium-Kupfer-Salzen, ist; und das Kupfersalz des Kolophoniumderivats mindestens eines, ausgewählt aus der Gruppe bestehend aus hydrierten Kolophonium-Kupfer-Salzen und disproportionierten Kolophonium-Kupfer-Salzen, ist.

6. Die bewuchshemmende Beschichtungszusammensetzung gemäß einem der Ansprüche 1 bis 5, wobei das Gewichtsverhältnis zwischen dem Anteil des mindestens einen Zinksalzes, ausgewählt aus der Gruppe bestehend aus Kolophonium-Zink-Salzen und Zinksalzen von Kolophoniumderivaten, und dem Anteil des mindestens einen Kupfersalzes, ausgewählt aus der Gruppe bestehend aus Kolophonium-Kupfer-Salzen und Kupfersalzen von Kolophoniumderivaten, (Zinksalz/Kupfersalz) im Bereich von 50/50 bis 0/100 liegt.

7. Die bewuchshemmende Beschichtungszusammensetzung gemäß einem der Ansprüche 1 bis 6, die 100 bis 400 Gewichtsteile an Kupfer(I)oxid mit einem durchschnittlichen Teilchendurchmesser von 3 bis 20 µm als das Kupfer(I)oxid pro Gesamtmenge von 100 Gewichtsteilen des Triisopropylsilyl(meth)acrylat-Copolymers und des mindestens einen Salzes (2) enthält.

8. Die bewuchshemmende Beschichtungszusammensetzung gemäß einem der Ansprüche 1 bis 7, die ferner 1 bis 50 Gewichtsteile eines bewuchshemmenden Mittels auf organischer Basis pro Gesamtmenge von 100 Gewichtsteilen des Triisopropylsilyl(meth)acrylat-Copolymers und des mindestens einen Salzes (2) umfasst.

9. Die bewuchshemmende Beschichtungszusammensetzung gemäß einem der Ansprüche 1 bis 8, die ferner 1 bis 50 Gewichtsteile eines Weichmachers pro Gesamtmenge von 100 Gewichtsteilen des Triisopropylsilyl(meth)acrylat-Copolymers und des mindestens einen Salzes (2) umfasst.

10. Die bewuchshemmende Beschichtungszusammensetzung gemäß einem der Ansprüche 1 bis 9, die ferner 1 bis 50 Gewichtsteile an Entwässerungsmittel pro Gesamtmenge von 100 Gewichtsteilen des Triisopropylsilyl(meth)acrylat-Copolymers und des mindestens einen Salzes (2) umfasst.

11. Die bewuchshemmende Beschichtungszusammensetzung gemäß Anspruch 10, wobei das Entwässerungsmittel mindestens ein Entfeuchter, ausgewählt aus der Gruppe bestehend aus Alkoxysilanen und Alkylorthoformiaten, ist.

12. Die bewuchshemmende Beschichtungszusammensetzung gemäß einem der Ansprüche 1 bis 11, die ferner 1 bis 50 Gewichtsteile eines Dispergierungsmittels auf Fettsäureamidbasis pro Gesamtmenge von 100 Gewichtsteilen des Triisopropylsilyl(meth)acrylat-Copolymers und des mindestens einen Salzes (2) umfasst.

13. Ein Verfahren zur Bewuchshemmungsbehandlung, umfassend den Schritt des Bildens eines bewuchshemmenden Beschichtungsfilms auf der Oberfläche eines Gegenstands, der beschichtet werden soll, unter Verwendung der bewuchshemmenden Beschichtungszusammensetzung gemäß einem der Ansprüche 1 bis 12.

14. Ein bewuchshemmender Beschichtungsfilm, der unter Verwendung der bewuchshemmenden Beschichtungszusammensetzung gemäß einem der Ansprüche 1 bis 12 gebildet ist.

15. Ein beschichteter Gegenstand mit dem bewuchshemmenden Beschichtungsfilm nach Anspruch 14 auf der Oberfläche desselben.

16. Ein Verfahren zur Herstellung einer bewuchshemmende Beschichtungszusammensetzung, umfassend den Schritt des Mischens:
(1) eines Triisopropylsilyl(meth)acrylat-Copolymers von
(a) 30 bis 65 Gew.-% Triisopropylsilyl(meth)acrylat,
(b) 5 bis 50 Gew.-% Methylmethacrylat, und
(c) 0 bis 60 Gew.-% eines anderen (Meth)acrylsäureesters,
wobei das Copolymer eine Glasübergangstemperatur von 20 bis 70°C und ein Zahlenmittel des Molekulargewichts von 5.000 bis 30.000 aufweist;
(2) mindestens eines Salzes, ausgewählt aus der Gruppe bestehend aus Kolophonium(Rosin)-Kupfer-Salzen und Kupfersalzen von Kolophonium(Rosin)-Derivaten, und gegebenenfalls mindestens eines Salzes, ausgewählt aus der Gruppe bestehend aus Kolophonium(Rosin)-Zink-Salzen und Zinksalzen von Kolophonium(Rosin)-Derivaten; und
(3) eines Kupfer(I)oxids,
wobei die bewuchshemmende Beschichtungszusammensetzung nicht mehr als 1 Gew.-% Kolophonium und Kolophoniumderivate mit einer oder mehreren freien Carboxylgruppen enthält.

17. Das Verfahren zur Herstellung einer bewuchshemmenden Beschichtungszusammensetzung gemäß Anspruch 16, das den Schritt des Mischens und des Dispergierens einer gemischten Lösung unter Verwendung einer Dispergierungsvorrichtung umfasst, wobei die gemischte Lösung enthält:
(1) das Triisopropylsilyl(meth)acrylat-Copolymer, wie in Anspruch 16 definiert;
(2) das Salz, wie in Anspruch 16 definiert; und
(3) das Kupfer(I)oxid, wobei das Kupfer(I)oxid einen durchschnittlichen Teilchendurchmesser von 3 bis 10 µm aufweist.

18. Das Verfahren zur Herstellung einer bewuchshemmenden Beschichtungszusammensetzung gemäß Anspruch 16, das die Schritte umfasst:
Mischen und Dispergieren einer gemischten Lösung unter Verwendung einer Dispergierungsvorrichtung, wobei die gemischte Lösung enthält:
(1) das Triisopropylsilyl(meth)acrylat-Copolymer, wie in Anspruch 16 definiert; und
(2) das Salz, wie in Anspruch 16 definiert, und
anschließendes Hinzufügen und Mischen
(3) des Kupfer(I)oxids, wobei das Kupfer(I)oxid einen durchschnittlichen Teilchendurchmesser von 10 bis 20 µm aufweist.

## Revendications

1. Composition de revêtement antisalissure comprenant :
(1) un copolymère de (méth)acrylate de triisopropylsilyle de
(a) 30 à 65 % en masse de (méth)acrylate de triisopropylsilyle,
(b) 5 à 50 % en masse de méthacrylate de méthyle, et
(c) 0 à 60 % en masse d'autre ester (méth)acrylique,
le copolymère de (méth)acrylate de triisopropylsilyle ayant une température de transition vitreuse de 20 à 70°C et une masse moléculaire moyenne en nombre de 5 000 à 30 000 ;
(2) au moins un sel choisi dans le groupe constitué de sels de cuivre de colophane et de sels de cuivre de dérivés de colophanes, et éventuellement au moins un sel choisi dans le groupe constitué de sels de zinc de colophane et de sels de zinc de dérivés de colophanes ; et
(3) un oxyde cupreux,
la composition de revêtement antisalissure contenant au plus 1 % en masse de colophanes et de dérivés de colophanes qui contiennent un ou plusieurs groupes carboxyle libres.

2. Composition de revêtement antisalissure selon la revendication 1, dans laquelle l'autre ester (méth)acrylique est au moins un élément choisi dans le groupe constitué de (méth)acrylate de 2-méthoxyéthyle, (méth)acrylate d'éthyle, (méth)acrylate de butyle et (méth)acrylate de 2-éthylhexyle.

3. Composition de revêtement antisalissure selon la revendication 1 ou 2, dans laquelle le rapport en masse entre la teneur du copolymère de (méth)acrylate de triisopropylsilyle et la teneur du sel (copolymère/sel) se trouve dans l'intervalle de 95/5 à 20/80.

4. Composition de revêtement antisalissure selon la revendication 1 ou 2, dans laquelle le rapport en masse entre la teneur du copolymère de (méth)acrylate de triisopropylsilyle et la teneur du sel (copolymère/sel) se trouve dans l'intervalle de 85/15 à 40/60.

5. Composition de revêtement antisalissure selon l'une quelconque des revendications 1 à 4, dans laquelle le sel de cuivre de colophane est au moins un élément choisi dans le groupe constitué de sels de cuivre de colophane résinique, de sels de cuivre de colophane de bois et de sels de cuivre de colophane de tallol ; et le sel de cuivre du dérivé de colophane est au moins un élément choisi dans le groupe constitué de sels de cuivre de colophane hydrogénée et de sels de cuivre de colophane dismutée.

6. Composition de revêtement antisalissure selon l'une quelconque des revendications 1 à 5, dans laquelle le rapport en masse entre la teneur du au moins un sel de zinc choisi dans le groupe constitué de sels de zinc de colophane et de sels de zinc de dérivés de colophanes et la teneur du au moins un sel de cuivre choisi dans le groupe constitué de sels de cuivre de colophane et de sels de cuivre de dérivés de colophanes (sel de zinc/sel de cuivre) se trouve dans l'intervalle de 50/50 à 0/100.

7. Composition de revêtement antisalissure selon l'une quelconque des revendications 1 à 6, laquelle contient de 100 à 400 parties en masse d'oxyde cupreux ayant un diamètre moyen de particule de 3 à 20 µm comme l'oxyde cupreux par quantité totale de 100 parties en masse du copolymère de (méth)acrylate de triisopropylsilyle et du au moins un sel (2).

8. Composition de revêtement antisalissure selon l'une quelconque des revendications 1 à 7, laquelle comprend de plus de 1 à 50 parties en masse d'agent antisalissure de base organique par quantité totale de 100 parties en masse du copolymère de (méth)acrylate de triisopropylsilyle et du au moins un sel (2).

9. Composition de revêtement antisalissure selon l'une quelconque des revendications 1 à 8, laquelle comprend de plus de 1 à 50 parties en masse de plastifiant par quantité totale de 100 parties en masse du copolymère de (méth)acrylate de triisopropylsilyle et du au moins un sel (2).

10. Composition de revêtement antisalissure selon l'une quelconque des revendications 1 à 9, laquelle comprend de plus de 1 à 50 parties en masse d'agent de déshydratation par quantité totale de 100 parties en masse du copolymère de (méth)acrylate de triisopropylsilyle et du au moins un sel (2).

11. Composition de revêtement antisalissure selon la revendication 10, dans laquelle l'agent de déshydratation est au moins un agent de déshumidification choisi dans le groupe constitué d'alcoxysilanes et d'orthoformates d'alkyle.

12. Composition de revêtement antisalissure selon l'une quelconque des revendications 1 à 11, laquelle comprend de plus de 1 à 50 parties en masse d'un dispersant à base d'amide d'acide gras par quantité totale de 100 parties en masse du copolymère de (méth)acrylate de triisopropylsilyle et du au moins un sel (2).

13. Procédé de traitement antisalissure comprenant l'étape de formation d'un film de revêtement antisalissure sur la surface d'un objet à revêtir en utilisant la composition de revêtement antisalissure citée dans l'une quelconque des revendications 1 à 12.

14. Film de revêtement antisalissure formé en utilisant la composition de revêtement antisalissure citée dans l'une quelconque des revendications 1 à 12.

15. Objet revêtu présentant le film de revêtement antisalissure de la revendication 14 sur sa surface.

16. Procédé de production d'une composition de revêtement antisalissure comprenant l'étape de mélange :
(1) d'un copolymère de (méth)acrylate de triisopropylsilyle de
(a) 30 à 65 % en masse de (méth)acrylate de triisopropylsilyle,
(b) 5 à 50 % en masse de méthacrylate de méthyle, et
(c) 0 à 60 % en masse d'autre ester (méth)acrylique,
le copolymère présentant une température de transition vitreuse de 20 à 70°C et une masse moléculaire moyenne en nombre de 5 000 à 30 000 ;
(2) d'au moins un sel choisi dans le groupe constitué de sels de cuivre de colophane et de sels de cuivre de dérivés de colophanes, et éventuellement d'au moins un sel choisi dans le groupe constitué de sels de zinc de colophane et de sels de zinc de dérivés de colophane ; et
(3) d'un oxyde cupreux,
la composition de revêtement antisalissure contenant au plus 1 % en masse de colophanes et de dérivés de colophanes qui contiennent un ou plusieurs groupes carboxyle libres.

17. Procédé de production d'une composition de revêtement antisalissure selon la revendication 16, lequel comprend l'étape de mélange et de dispersion d'une solution mixte en utilisant un dispositif de dispersion, la solution mixte contenant :
(1) le copolymère de (méth)acrylate de triisopropylsilyle comme défini dans la revendication 16 ;
(2) le sel comme défini dans la revendication 16 ; et
(3) l'oxyde cupreux dans lequel l'oxyde cupreux présente un diamètre moyen de particule de 3 à 10 µm.

18. Procédé de production d'une composition de revêtement antisalissure selon la revendication 16, lequel comprend les étapes de :
mélange et dispersion d'une solution mixte en utilisant un dispositif de dispersion, la solution mixte contenant :
(1) le copolymère de (méth)acrylate de triisopropylsilyle comme défini dans la revendication 16 ; et
(2) le sel comme défini dans la revendication 16, et d'addition et mélange subséquents
(3) de l'oxyde cupreux dans lequel l'oxyde cupreux présente un diamètre moyen de particule de 10 à 20 µm.
